(19)

**Europäisches Patentamt**
**European Patent Office**
**Office européen des brevets**

(11)  **EP 4 718 662 A1**

(12)  **EUROPEAN PATENT APPLICATION**

(43) Date of publication:
**01.04.2026   Bulletin 2026/14**

(21) Application number: **24315441.6**

(22) Date of filing: **25.09.2024**

(51) International Patent Classification (IPC):
*H02J 3/38* (2026.01)      *G05B 15/02* (2006.01)

(52) Cooperative Patent Classification (CPC):
**H02J 3/381;** H02J 2101/20; H02J 2101/22;
H02J 2101/28

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **NANTES UNIVERSITÉ**
  **44035 Nantes Cedex 1 (FR)**
• **Ecole Centrale De Nantes**
  **44300 Nantes (FR)**
• **Centre National de la Recherche Scientifique**
  **75016 Paris (FR)**

(72) Inventors:
• **Marinescu, Bogdan**
  **44000 Nantes (FR)**
• **Thomas, Vinu**
  **44000 Nantes (FR)**
• **Kuruva, Veeranna**
  **44300 Nantes (FR)**
• **Abolmassoumi, Amir Hossein**
  **44100 Nantes (FR)**

(74) Representative: **Cabinet Chaillot**
**16/20, avenue de l'Agent Sarre**
**B.P. 74**
**92703 Colombes Cedex (FR)**

(54) **METHOD FOR CONTROLLING THE OPERATION OF RENEWABLE ENERGY SOURCE GENERATORS, AND CORRESPONDING RENEWABLE ENERGY SOURCE GENERATOR, ELECTRICAL GRID AND MACHINE-READABLE MEDIUM**

(57)     Method for controlling the operation of N Renewable Energy Source, RES, generators in an electrical grid, N being a non-zero natural integer, each RES generator $RES_i$, with i e {1, .., N}, being connected to the electrical grid at a respective grid connection point, the reactive power, the active power and the voltage of the RES generator $RES_i$ being designated respectively $Q_i$, $P_i$ and $V_i$, the RES generator $RES_i$ injecting current in the electrical grid through a DC bus voltage, the DC bus voltage of the RES generator $RES_i$ being designated respectively $V_{dci}$, wherein the method comprises correcting the values of $P_i$, $V_{dci}$ and at least one of $Q_i$ and $V_i$, measured at the output of the $RES_i$ to reference values designated respectively by $Q_{iref}$, $P_{iref}$, $V_{iref}$ and $V_{dciref}$ at a first frequency, updating the values of $P_{iref}$ and $V_{dciref}$ at a second frequency slower than the first frequency, and updating the values of $Q_{iref}$, $V_{iref}$ at a third frequency slower than the second frequency.

[Fig. 6]

**EP 4 718 662 A1**

## Description

The invention concerns the domain of electrical grids, and relates more particularly to a method for controlling the operation of renewable energy source generators, a renewable energy source generator, an electrical grid comprising such renewable energy source generator and a corresponding machine-readable medium.

A Dynamic Virtual Power Plant (DVPP) is a set of renewable generators running together by a set of procedures and control in order to provide grid ancillary services and participation to electricity markets as a unique equivalent generator. The concept is detailed in B. Marinescu, O. Gomis-Bellmunt, F. Dörfler, H. Schulte and L. Sigrist, "Dynamic Virtual Power Plant: A New Concept for Grid Integration of Renewable Energy Sources," in IEEE Access, vol. 10, pp. 104980-104995, 2022.

A RES generator can be for instance a wind turbine, a wind farm, a solar pane, a solar farm, a synchronous generator, a set of synchronous generators, and more generally any device or set of devices that produces energy from natural resources.

To provide voltage and frequency grid services, the DVPP fully integrates the dynamic aspects at all levels: locally (for each Renewable Energy Source (RES) generator), globally (for grid ancillary services and interaction with other close-by elements of the grid) and economically (for internal optimal dispatch and participation in electricity markets). Thus, a DVPP is a set of dispatchable and non-dispatchable RES along with a set of common control and operation procedures.

The notion of Virtual Power Plant (VPP) was already used in literature but mostly for static aspects. Indeed, the existing work on VPP deal with a set of RES generators but limited to economic dispatch (e.g., Huang, Chongxin and Yue, Dong and Xie, Jun and Li, Yaping and Wang, Ke, Economic dispatch of power systems with virtual power plant based interval optimization method, CSEE Journal of Power and Energy Systems, vol. 2, no. 1, pp. 74-80, 2016) or RES integration in electricity markets (see for example Koraki, Despina and Strunz, Kai, Wind and Solar Power Integration in Electricity Markets and Distribution Networks Through Service-Centric Virtual Power Plants, IEEE Transactions on Power Systems, vol. 33, no. 1, pp. 473-485, 2018.). The fastest dynamics studied in a VPP concern the secondary frequency-power control (see for example An overview of ancillary services in Spain, Electric Power Systems Research, vol. 78, no. 3, pp. 515-523, 2008).

The POSYTYF H2020 RIA (Powering System Flexibility in the Future through Renewable Energy Sources, https://posytyf-h2020.eu/, 2020-2024) has recently proposed several solutions to build the DVPP concept.

The concept of Virtual Power Plant (VPP) has arisen over a decade ago from the relatively low competitiveness of the back then emerging nondispatchable Renewable Energy Sources (RES). A set of smaller generators imitates the behavior of large synchronous generators. So far, static aspects such as generation or slow dynamics have been of interest, as it is the case for the zonal secondary frequency control scheme in Spain, which can be viewed as a VPP. However, considering dynamic aspects is of high importance, especially to further increase the current penetration level of RES.

Control of power converters is usually done by the so-called vector control which artificially separates the dynamics of the plant to provide a fast inner control loop driven by a slower outer loop for each power converter. Each control consists into a classic single-input single output PI control. The solution consists thus in a set of single-input/single output PI controls for each converter (see for example Kazmierkowski, M. P., & Malesani, L. (1998). Current control techniques for three-phase voltage-source PWM converters: A survey. IEEE Transactions on industrial electronics, 45(5), 691-703, or Bacha, S., Munteanu, I., & Bratcu, A. I. (2014). Power electronic converters modeling and control. Advanced textbooks in control and signal processing, 454, 454). First, it is difficult to ensure coordination among the control actions. Next, the imposed slow/fast dynamics lower the robustness of the overall control. Such separation of control loops is also inherited in many more advanced controls (Bratcu, A. I., Munteanu, I., Bacha, S., Picault, D., & Raison, B. (2010), Cascaded dc-dc converter photovoltaic systems: Power optimization issues, IEEE Transactions on Industrial Electronics, 58(2), 403-411).

A new strategy is proposed in the present application. Instead of modifying the natural dynamics of the open-loop plant, these dynamics are considered as they are and several layers of control are proposed accordingly. Also, according to a particular embodiment, all actuators are treated at the same time into a unique synthesis process to compute in a coordinated manner gains for a multi-input/multi-output PI controller following classic advanced control approaches as multivariable H-infinity control (see Skogestad, S., & Postlethwaite, I., Multivariable feedback control: analysis and design. John Wiley & sons, 2005). Decentralization of the controls is also an important aspect for the DVPP realization in order to ensure plug- and-play capability and alleviate implementation.

A decentralized approach has been proposed by Häberle, V., Fisher, M. W., Araujo, E. P., et al: 'Control design of dynamic virtual power plants: An adaptive divide-and-conquer approach', IEEE Transactions on Power Systems, 2021.

It is based on a fully decentralized control in which a desired transfer function is matched via model-matching control for each generator of the DVPP in order to reach a desired global transfer matrix $T_{des}(s)$.

An object of the present invention is therefore a method for controlling the operation of N Renewable Energy Source, RES, generators in an electrical grid, N being a non-zero natural integer, each RES generator $RES_i$, with $i \in \{1, ..,$

N}, being connected to the electrical grid at a respective grid connection point, the reactive power, the active power and the voltage of the RES generator $RES_i$ being designated respectively $Q_i$, $P_i$ and $V_i$, the RES generator $RES_i$ injecting current in the electrical grid through a DC bus voltage, the DC bus voltage of the RES generator $RES_i$ being designated respectively $V_{dci}$, wherein the method comprises correcting the values of $P_i$, $V_{dci}$ and at least one of $Q_i$ and $V_i$, measured at the output of the $RES_i$ to reference values designated respectively by $Q_{iref}$, $P_{iref}$, $V_{iref}$ and $V_{dciref}$ at a first frequency, updating the values of $P_{iref}$ and $V_{dciref}$ at a second frequency slower than the first frequency, and updating the values of $Q_{iref}$, $V_{iref}$ at a third frequency slower than the second frequency.

According to a particular embodiment, i is greater or equal to 2 and, for each RESi, the values of Pi, Vdci and at least one of Qi and Vi are corrected for each REScalculated at the RESi level using values of Pi, Vdci and at least one of Qi and Vi and Qiref, Piref, Viref and Vdciref available at the RESi level.. A so-called decentralized approach is therefore used to control the operation of the N RES.

According to a particular embodiment, i is greater or equal to 2 and the values of Pi, Vdci and at least one of Qi and Vi are calculated centrally at the electrical grid level using values of Pi, Vdci and at least one of Qi and Vi and Qiref, Piref, Viref and Vdciref available at all RESi in the electrical grid.. A so-called centralized approach is therefore used to control the operation of the N RES. The simultaneous calculation of the corrected values of $P_i$, $V_{dci}$ and at least one of $Q_i$ and $V_i$ allows to take into account for each RES generator, the contributions of all the other RES generators in the electrical grid.

According to a particular embodiment, the values of $P_{iref}$ and $V_{dciref}$ are updated as a function of the values of $P_i$ and $V_{dci}$ at the output of all the $RES_i$.

According to a particular embodiment, the first frequency is greater than 1 Hz.

For example, $P_i$, $V_{dci}$ and at least one of $Q_i$ and $V_i$ are updated every 10ms to every 10s, $P_{iref}$ and $V_{dciref}$ are updated every minute, while $P_{iref}$, $V_{iref}$ are updated every 10 minutes or more.

Another object of the invention is a renewable energy source generator comprising calculation means and memory comprising instructions which, when executed by the calculation means, cause the calculation means to implement the method as described above.

Another object of the invention is an electrical grid comprising at least one Renewable Energy source as described above.

Another object of the invention is a machine readable medium comprising instructions which, when executed on a computer, cause the computer to implement the method as described above.

In the present application, according to a particular embodiment, to maximize robustness of the control, a centralized synthesis of the control in the robust H-infinity framework and a decentralized implementation based on overlapping control (Magid. S. Mahmoud, Decentralized Control and Filtering in Interconnected Dynamical Systems, CRC Press 2011) are proposed. Also, Kalman filters can be used to replace the conventional second-order Butterworth filters (see Abad, G., Sanchez-Ruiz, A., Valera-Garcia, J. J., & Milikua, A. (2020), Analysis and design guidelines for current control loops of grid-connected converters based on mathematical models. Energies, 13(21), 5849) to filter the ripples and noise from the measured voltages and currents so as not to hinder the performance of the controller in terms of keeping the frequency band performance that is accurately designed through loop-shaping technique. Kalman filter is known to produce more accurate state estimates from feedback signals overcoming the inaccuracies of measurements and thereby leading to lesser interactions of the switching harmonics and measurement noises with the controller.

In order to better illustrate the subject-matter of the invention, an embodiment will now be described, in an illustrative and non-limiting way, in relation to appended drawings.

On the drawings:

[Fig. 1] represents schematically a time decoupling structure for grid-connected RES generator according to the invention.

[Fig. 2] represents time and space separation of the control of the grid connected RESs for a centralized control plan.

[Fig. 3] represents time and space separation of the control of the grid connected RESs for a decentralized control plan.

[Fig. 4] represents an extended control model for DVPP.

[Fig. 5a] represents a first realization of an extended control model for multiple generators.

[Fig. 5b] represents a second realization of an extended control model for multiple generators, equivalent to the one represented in Figure 5a.

[Fig. 6] represents time/space control structure for renewable energy sources.

[Fig. 7] represents different types of RES connected to an electrical grid.

[Fig. 8] represents a grid-connected PMSG utilizing back-to-back converter.

[Fig. 9] represents a LMI-based control system design process.

[Fig. 10] represents a LMI disk region.

[Fig. 11] represents an open loop Bode plot for a PMSG.

[Fig. 12] represents a Bode plot of a loop gain for a MIMO controller.

[Fig. 13] represents an implementation for H∞ loop shaping with state estimation.

[Fig. 14] represents a generic example of overlapping control.

[Fig. 15] represents a specific example of overlapping in the context of the invention.

[Fig. 16] shows results of open loop simulations.

[Fig. 17] represents the mechanical speed of PMSG1 of Figure 15.

[Fig. 18] represents the electromagnetic power of PMSG1 of Figure 15.

[Fig. 19] represents the DC link voltage of PMSG1 of Figure 15.

[Fig. 20] represents the reactive power of PMSG1 of Figure 15.

[Fig. 21] represents the mechanical speed of PMSG2 of Figure 15.

[Fig. 22] represents the electromagnetic power of PMSG2 of Figure 15.

[Fig. 23] represents the DC link voltage of PMSG2 of Figure 15.

[Fig. 24] represents the reactive power of PMSG1 of Figure 15.

[Fig. 25] represents the frequency at SG1 and SG2 of Figure 15.

[Fig. 26] represents the frequency at PMSG 1 (PCC1) and PMSG 2 (PCC2) of Figure 15.

[Fig. 27] represents the grid voltage at SG1 of Figure 15.

[Fig. 28] represents the grid voltage at SG2 of Figure 15.

[Fig. 29] represents the PMSG1 Grid voltage at PCC1 of Figure 15.

[Fig. 30] represents the PMSG2 Grid voltage at PCC2 of Figure 15.

[Fig. 31] represents constant mechanical rotating speed of PMSG1 of Figure 15.

[Fig. 32] represents electromagnetic torque of PMSG1 of Figure 15.

[Fig. 33] represents the step response of electromagnetic power of PMSG1 of Figure 15.

[Fig. 34] represents DC link voltage of PMSG1 of Figure 15.

[Fig. 35] represents the step response of reactive power of PMSG1 of Figure 15.

[Fig. 36] represents constant mechanical rotating speed of PMSG2 of Figure 15.

[Fig. 37] represents the step response of electromagnetic power torque of PMSG2 of Figure 15.

[Fig. 38] represents the step response of electromagnetic power of PMSG2 of Figure 15.

[Fig. 39] represents DC link voltage of PMSG2 of Figure 15.

[Fig. 40] represents the step response of reactive power of PMSG2 of Figure 15.

[Fig. 41] represents the frequency at SG1 and SG2 of Figure 15.

[Fig. 42] represents the frequency at PMSG1 (PCC1) and PMSG2 (PCC2) of Figure 15.

[Fig. 43] represents a test case with two PMSGs with three-phase short circuit fault at bus 5.

[Fig. 44] represents electromagnetic power of PMSG1 of Figure 43 during fault.

[Fig. 45] represents DC link voltage of PMSG1 of Figure 43 during fault.

[Fig. 46] represents reactive power of PMSG1 of Figure 43 during fault.

[Fig. 47] represents grid current of PMSG1 of Figure 43 during fault.

[Fig. 48] represents electromagnetic power of PMSG2 of Figure 43 during fault.

[Fig. 49] represents DC link voltage of PMSG2 of Figure 43 during fault.

[Fig. 50] represents reactive power of PMSG2 of Figure 43 during fault.

[Fig. 51] represents grid current of PMSG2 of Figure 43 during fault.

[Fig. 52] represents frequency at SG1 and SG2 of Figure 43.

[Fig. 53] represents the frequency at PMSG1 (PCC1) and PMSG2 (PCC2) of Figure 43.

[Fig. 54] represents electromagnetic power of PMSG1 of Figure 15 during a step increase in load.

[Fig. 55] represents electromagnetic power of PMSG2 of Figure 15 during a step increase in load

[Fig. 56] represents DC link voltage of PMSG1 of Figure 15 during a step increase in load.

[Fig. 57] represents DC link voltage of PMSG2 of Figure 15 during a step increase in load.

[Fig. 58] represents reactive power of PMSG1 of Figure 15 during a step increase in load.

[Fig. 59] represents reactive power of PMSG2 of Figure 15 during a step increase in load.

[Fig. 60] represents active power of SG1 in Figure 15 during a step increase in load.

[Fig. 61] represents active power of SG1 in Figure 15 during a step increase in load.

[Fig. 62] represents frequency at SG1 and SG2 in Figure 15 during a step increase in load.

[Fig. 63] represents the frequency at PMSG1 (PCC1) and PMSG2 (PCC2) of Figure 15 during a step increase in load.

[Fig. 64] represents an exemplary hardware implementation for H∞ loopshaping with state estimation for Grid side converter.

[Fig. 65] represents hardware step response for active power with one converter.

[Fig. 66] represents hardware step response for reactive power with one converter.

According to the invention, for an electrical grid comprising several RES generators, the general objective is to run RES generators together in order to ensure a proper dynamic behaviour of a DVPP, in particular, participation of the DVPP to voltage and frequency ancillary services of the electrical grid.

From the control point of view, this means:

- local Q or (equivalently) V control, i.e., tracking a reference $Q_{ref}$ or $V_{ref}$ at the grid connection point for each RES generator/DVPP unit. This objective is to ensure that RES can participate in Voltage Service Provider (VSP).
- regulation of the DC bus voltage of the power electronics part, i.e., tracking of a reference $V_{dcref}$
- regulation of the generated active power of each RES generator/DVPP unit to a given setpoint $P_{ref}$
- primary grid frequency support, i.e., Frequency Containment Reserve (FCR): minimization of the gap $\Delta f$ from actual grid frequency to nominal frequency (50 or 60Hz) in case of grid faults and variations. ROCOF (Rate Of Change Of Frequency) should also be improved.
- secondary grid frequency support, i.e., automatic Frequency Restoration Reserve (aFRR): issue the reference $P_{ref}$ from the secondary frequency control level (AGC) of the AC zone to which the RES generator/DVPP unit belongs to.
- secondary grid voltage support: issue the reference $V_{ref}$ for the voltage of the Power Park Module grid connection point from the secondary voltage control level of the AC zone to which the RES generator/DVPP unit belongs to. This is also part of voltage grid services. A RES generator can also be designated in the above application as a DVPP unit.

To reach the objectives formulated above, a new control framework is used to reach maximum coordination between all actuators of a DVPP unit and among all DVPP units. The main difference with the classic vector control is that the control is not structured around each actuator, but according to the time response (frequency band) of the actuators and open-loop plant dynamics.

This results from a structure of plant dynamics split into 3 categories:

- very fast ones which correspond to dynamics of voltage/reactive power and active power variation needed to improve the grid frequency gradient (RoCoF).
- fast ones related to primary frequency regulation (FCR) of the DVPP units and the internal DVPP redispatch. The latter corresponds to a supplementary loop to redispatch production inside the DVPP in case of lack of natural resources on one zone of the DVPP, in order to keep the global output of the DVPP on the (primary control) schedule. The internal redispatch is done with a time constant around 4s in order not to interact with primary and secondary power controls. The classic primary frequency regulation control here is the droop control.
- slow dynamics (more than one minute) which correspond to RES participation to secondary grid controls (aFRR and VSP).

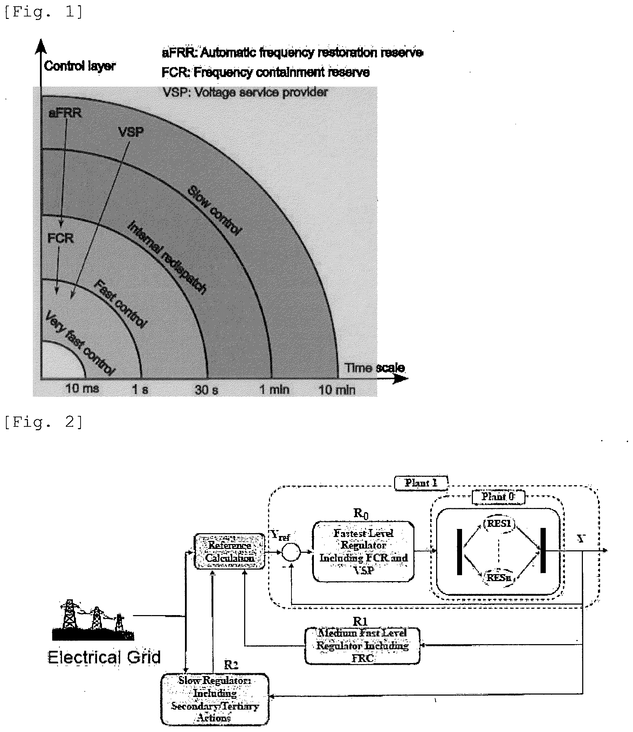

This time-scale separation as shown in Figure 1 is compliant with the natural dynamics of the system and with the multi-layers control strategy in power systems (primary, secondary and tertiary layers). Classification lays on principles of singular perturbation theory, i.e., few times slower dynamics can be considered as weakly interacting with the fast ones. However, here, the fast dynamics are not neglected as in the singular perturbation theory, but integrated along with their controls into the control model for the slower dynamics.

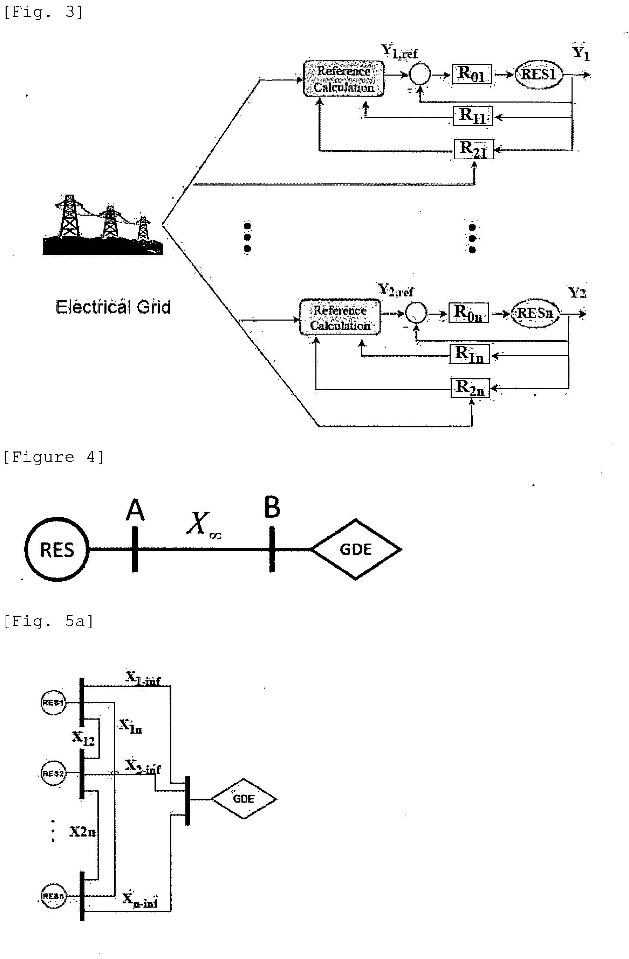

Based on this time-scale separation, the proposed control method is structured as in Figure 2: Plant 0 is the plant to be controlled by regulator 0 (i.e., Reg. 0). It will be shown hereinafter how the latter ones will be captured in an original control model. Three stages of control are proposed according to the time scales. The closed-loop obtained at one stage is the input for the next stage, and regulated by corresponding regulators (i.e., Reg. 0, Reg. 1). In this way, a hierarchical and sequential synthesis is possible, with, at each level, account for the faster controls of lower levels and with minimal risk of parasitic dynamic interactions. It should be noted also that this strategy is compliant with actual organization of controls in power systems (structured in primary/secondary layers) and opens the way of direct integration of DVPPs into existing power systems controls and market mechanisms. The decentralized variant is presented in Figure 3, where the regulators are designed in a separated way for each of the renewable energy sources. The multi-time-scale and hierarchical structure can still be noticed, however, configured in a decentralized way.

In both Figures 2 and 3, R0 represents the fastest regulator, while R1 represents the medium fast regulator and R2 the slower regulator. Y and Yref represent respectively the vector of variable regulated and the vector of reference variables. As can be seen from Figure 2, the control is done by assimilating all the RES generators as a single RES generator or plant or DVPP unit, in order to take into account, for each RES generator, the contributions of all the other RES generators.

By contrast, in Figure 3, the control is made for each RES generator separately, so that contributions from the other RES generators in the electrical grid are not taken into account. As a consequence, instead of having only one regulator (R0, R1, R2) for all RES as in Figure 2, each RESi has its own sets of regulators (R0i, R1i, R2i). Several robust approaches have been tested for the DVPP. One has been found fully feasible, ie, both from the performances and implementability points of view. It consists in a classic H-infinity synthesis with an original loop-shaping and state estimator in order to damp specific medium frequency oscillations (around 200-300Hz) which systematically appear with the hardware implementation. This makes an important difference with many advanced controls presented in the literature but not validated on hardware and with classic vector control based solutions which use additional and a priory tuned standard filters (like, eg, Butterworth filters) on measures. The advantage of the loop-shaping and optimal (Kalman) state observer used here is that the synthesis of both is done in full coordination with the controller gains computation. This ensures maximization of performances and robustness and provides also an automatic - push button - way of doing, which is an advantage to promote the approach to not expert users. The approach will be first presented for the case of 1 generator. It will be extended next to the case of DVPPs with several generators.

To capture both V and f dynamics, the model used is shown in Figure 4.

It consists of the full model of the plant to be controlled, an equivalent AC line of reactance $X_\infty$ and a Grid Dynamic Equivalent (block GDE) which provides a model for the grid frequency behavior. The line $X_\infty$ plays the same role as in the classic SMIB (Single Machine Infinite Bus) model. This accounts for the grid short-circuit power at RES connection bus A and it is computed in a standard way. The difference with the SMIB is that the electrical frequency of bus B is not fixed at the nominal grid frequency (50 or 60Hz), but given by GDE by the following swing equation:

[Math. 1]

$$2H\frac{d\omega_f}{dt} = P_G - P_L - D_u\Delta\omega_f$$

and the three-phase voltage dynamics:

[Math. 2]

$$V_B{}^a = V\sin(\theta_f)$$
$$V_B{}^b = V\sin(\theta_f - 2\frac{\pi}{3})$$
$$V_B{}^c = V\sin(\theta_f + 2\frac{\pi}{3}).$$

H is the equivalent inertia of the rest of the system (in which the controlled DVPP is inserted), $P_G$ is the global active power produced in the rest of the system and $P_L$ corresponds to the global load of the system. $P_m$ is a constant input for the DVPP control problem. Dynamics of equation [Math. 1] is stabilized by the damping factor $D_u$ and a simple integrator for deviation of $\omega_f$ from the nominal grid frequency if a secondary frequency control is considered.

Different (from the simple integrator) controls can be considered if more sophisticated grid frequency dynamics should be emulated. H is computed by classic equivalencing methods (e.g., Kundur, P. (1994), Power Systems Stability and Control, EPRI) used in frequency studies. The difference between GDE and fixed infinite bus model is that GDE captures also voltage dynamics in compliance with the f ones.

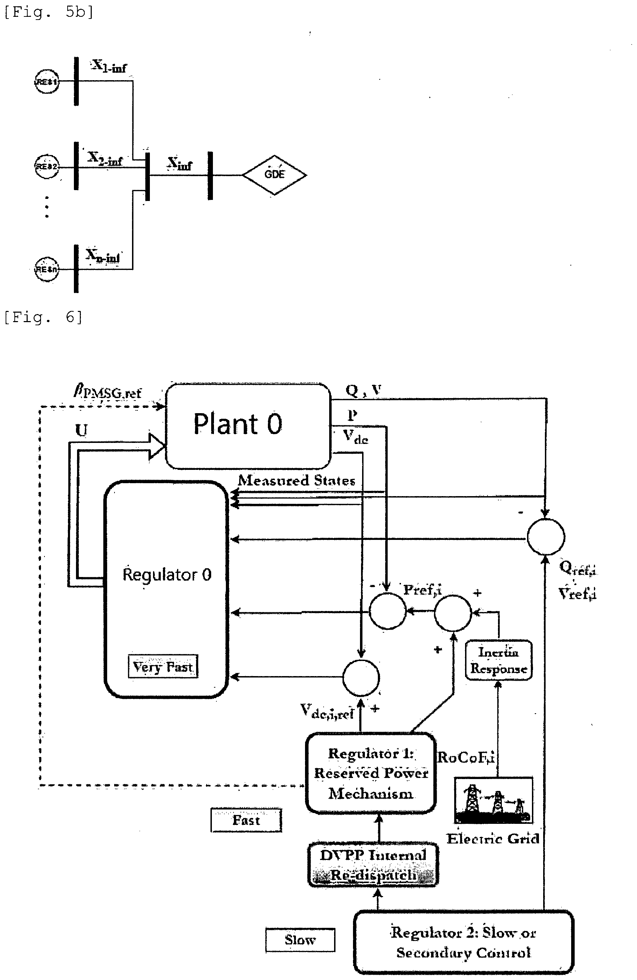

If the DVPP contains several generators to be controlled, the structure of the control model is one of the two equivalent ones given in Figures 5a and 5b. Reactances account for the equivalent reactance between the each two buses, as the one in Figure 4. They are computed in a standard way, ie, by measuring the short-circuit current at each node of Figures 5a and 5b.

The general time-space structure for renewable energy systems explained above is illustrated to facilitate the establishment and execution of proposed control method in Figure 6.

In Figure 6, a centralized control method is represented. In case of a decentralized control method, PlantO is replaced with $RES_i$ and Regulator 0 is replaced by Regulator $0_i$.

As can be seen in Figure 6, output values of P, $V_{dc}$, and at least one of Q and V, are corrected to corresponding reference values $P_{ref}$, $V_{dcref}$, and at least one of $Q_{ref}$ and $V_{ref}$. Regulator 0 corrects P, $V_{dc}$, and at least one of Q and V at a first fast frequency greater or equal to 1Hz, while the values of $V_{dcref}$ and $P_{ref}$ are corrected by Regulator 1 at a second frequency slower than the first frequency and values of $Q_{ref}$ and/or $V_{ref}$ are corrected at a third frequency slower than the second frequency by Regulator 2, to obtain the time decoupling structure of Figure 1.

The PlantO is therefore directly regulated by Regulator 0, i.e., fast control. This includes DC voltage $V_{dc}$, active power P, reactive power Q and inertia response. Furthermore, the structure can be adjusted to meet the needs of various control objectives in function of the type of DVPP generators and type of implementation.

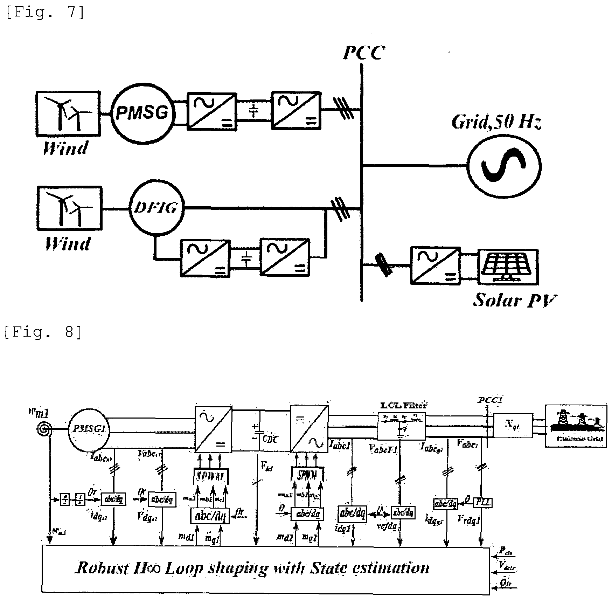

More specifically, PlantO can consist of Doubly-Fed Induction Generator (DFIG) wind energy systems with converters, Permanent Magnet Synchronous Generator (PMSG) wind energy system and/or Photovoltaic (PV) system with only one converter, as illustrated in Figure 7.

PlantO can be an individual generator if the DVPP consists only in one generator or if the DVPP consists in several generators and it is controlled in a decentralized way, as discussed below. If the DVPP consists in several generators and it is controlled in a centralized way, PlantO consists in the control model given in Figures 5a and 5b.

Example with one generator

A Permanent Magnet Synchronous Generator (PMSG) is considered as RES generator for a concrete example. As mentioned above, the control can be applied to other RES technologies.

A modelling of one PMSG-based grid-connected wind energy system will now be described.

The aforementioned control model consists in the system shown in Figure 8 consists of a variable speed device connected to a PMSG to generate electrical energy as alternating current (AC). The output of the PMSG is connected to a Machine side converter (MSC) to convert the AC power to direct current (DC) power.

The mechanical speed produces $\theta$r. Grid-side converter (GSC) converts the DC power to AC power and feeds to the grid through an LCL filter. For the grid side, a phase-locked loop (PLL) is utilized to generate the phase angle $\theta$ of the grid voltage which is useful to synchronize the converter output to the grid voltage and also to perform the stationary reference frame (abc) to rotating reference (dq0) frame transformation.

The mechanical power extracted from the wind energy source is converted by the PMSG into electrical power. The fundamental swing equation governing the dynamics of such energy conversion is represented as:

[Math. 3]

$$\frac{d\omega_m}{dt} = T_{m1} - T_{e1} - B\omega_{m1}$$

where, $T_{m1}$, $T_{e1}$ are the mechanical and electrical torques, respectively. Also, B represents the friction coefficient. The electric torque then is calculated as $T_{e1} = (3/2)(p/2)\psi_m i_{sq1}$, $\omega_{e1} = (p/2)\omega_{m1}$, where $\psi_m$ is the rotor magnetic flux and p represents the number of stator poles. Also, $i_{sq1}$ is the quadrature element of the stator current. Therefore, if the power transferred from the machine to the converter is represented by electromagnetic power ($P_{e1}$) and reactive power ($Q_1$) which is transferred from the converter to the grid is also calculated from formula below:

[Math. 4]

$$P_{e1} = \frac{3}{2}\left(\frac{p}{2}\right)\psi_m i_{sq1}\omega_{e1}; \quad Q_1 = \frac{3}{2}\left(V_{rq1}i_{dg1} - V_{rd1}i_{qg1}\right)$$

The full set of equations for the PMSG, dc-link, and LCL filter can be then obtained from equation as follows:

[Math. 5]

$$
\begin{cases}
\frac{di_{sd1}}{dt} = -\frac{R_s}{L_s}i_{sd1} + \frac{p}{2}\omega_{m1}i_{sq1} - \frac{1}{2}\frac{m_{d1}V_{dc1}}{L_s} \\
\frac{di_{sq1}}{dt} = -\frac{R_s}{L_s}i_{sq1} - \frac{p}{2}\omega_{m}1i_{sd1} - \frac{1}{2}\frac{m_{q1}V_{dc1}}{L_s} + \frac{p}{2}\frac{1}{L_s}\psi_m\omega_{m1} \\
\frac{d\omega_{m1}}{dt} = \frac{1}{J}\left(\frac{P_{m1}}{\omega_{m1}} - \frac{3}{2}\frac{p}{2}\psi_m i_{sq1} - B\omega_{m1}\right) \\
\frac{dV_{dc1}}{dt} = \frac{3}{4C}\left(m_{d1}i_{sd1} + m_{q1}i_{sq1} - m_{d2}i_{d1} - m_{q1}i_{q1}\right) \\
\frac{di_{d1}}{dt} = -\frac{R_1}{L_1}i_{d1} + \omega_f i_{q1} - \frac{v_{cfd1}}{L_1} + \frac{1}{2}\frac{m_{d2}V_{dc1}}{L_1} \\
\frac{di_{q1}}{dt} = -\frac{R_1}{L_1}i_{q1} - \omega_f i_{d1} - \frac{v_{cfq1}}{L_1} + \frac{1}{2}\frac{m_{q2}V_{dc1}}{L_1} \\
\frac{di_{dg2}}{dt} = -\frac{R_2}{L_2}i_{dg1} + \omega_f i_{qg1} + \frac{v_{cfd1}}{L_2} - \frac{1}{L_2}V_{rd1} \\
\frac{di_{qg2}}{dt} = -\frac{R_2}{L_2}i_{qg1} - \omega_f i_{dg1} + \frac{v_{cfq1}}{L_2} - \frac{1}{L_2}V_{rq1} \\
\frac{dv_{cfd1}}{dt} = \frac{1}{C_f}i_{d1} - \frac{1}{C_f}i_{dg1} + \omega_f v_{cfq1} \\
\frac{dv_{cfq1}}{dt} = \frac{1}{C_f}i_{q1} - \frac{1}{C_f}i_{qg1} - \omega_f v_{cfd1}
\end{cases}
$$

where, $R_s$ is the stator resistance, $L_s$ is the stator inductance and $i_{sd1}$, $i_{sq1}$ are the stator currents. The grid is assumed to have a balanced 3-phase voltage of magnitude V. $\omega_f$ represents the angular frequency of the grid, $x_{g1}$ is the reactance, $i_{d1}$, $i_{q1}$ are the inverter-side currents, $i_{dg1}$, $i_{qg1}$ are the grid-side currents, $v_{cfd1}$, $v_{cfq1}$ are the capacitor voltages and $m_{dq1}$, $m_{dq2}$ are the modulating signal applied to construct the sine pulse width modulation (SPWM) to generate PWM signals for the MSC and GSC, respectively.

If grid side the transmission line $X_{g1} = \omega_g L_g$ and $L_g = L_l$, where L is the transmission line inductance, 1 is the length of transmission line, the voltage drop calculated at Point of Common Coupling (PCC) PCC1 is:

[Math. 6]

$$
V_{rd1} = V + X_{g1}i_{qg1}
$$

[Math. 7]

$$
V_{rq1} = X_{g1}i_{dg1}
$$

The neighbor GDE (grid equivalent dynamic) of the control model presented above is:

[Math. 8]

$$
\frac{dw_f}{dt} = \frac{1}{2H}\left(P_{g1} - P_{L1} + P_{e1} - D_u\Delta\omega_f\right)
$$

[Math. 9]

$$
\frac{dw_f}{dt} = \frac{1}{2H}\left(P_{g1} - P_{L1} + \frac{3}{2}\frac{p}{2}\psi_m i_{sq1}\omega_{e1} - D_u\omega_f - D_u\omega_0\right)
$$

where $P_{g1}$ is the generated power of AC grid, $P_{L1}$ is the equivalent grid load, $P_{e1}$ is the power from PMSG1, $\Delta\omega_f = \omega_f - \omega_0$ and

H is the grid inertia constant, and $\omega_f$ is the grid frequency.

The set of Differential-Algebraic Equations (DAE) from [Math. 5], [Math. 6], [Math. 7] and [Math. 9] leads to the state-space form below:

[Math. 10]

$$\begin{cases} \dot{x} = Ax + B_1 u + B_2 w \\ y = Cx \end{cases}$$

where x is the state vector, u is the control input, w is the disturbance and y is the output of the system, which are defined as:

$$x = [i_{sd1} \ i_{sq1} \ w_{m1} \ V_{dc1} \ i_{d1} \ i_{q1} \ i_{dg1} \ i_{qg1} \ V_{cfd1} \ V_{cfq1} \ w_f]^T$$

$$u = [m_{d1} \ m_{q1} \ m_{d2} \ m_{q2}]^T$$

$$w = [V_{rd1} \ V_{rq1} \ P_{L1}]^T$$

$$y = [P_{e1} \ V_{dc1} \ Q_1]^T$$

In this model, the parameters controlled are P, $V_{dc}$ and Q.

Q and V being linked, the skilled person will know how to adapt the model presently disclosed to an equivalent control of P, $V_{dc}$ and V.

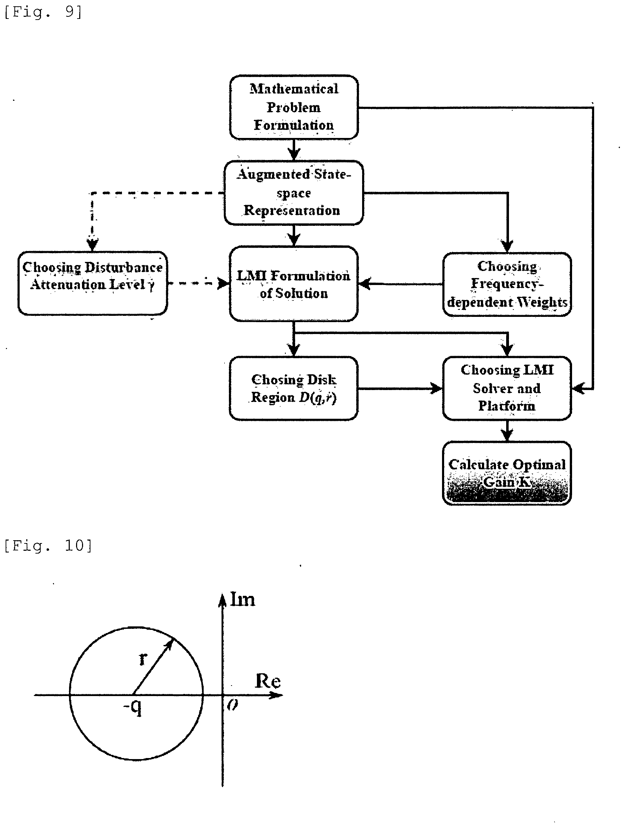

The control synthesis is applied to the PMSG-based generation unit. Here, a state-feedback control is designed that incorporates all states as feedback and constructs a robust control. In the PMSG-based system, there are two converters to be controlled, requiring the generation of four control inputs $m_{d1}, m_{q1}, m_{d2}, m_{q2}$ using feedback from the state vector, which includes the states of the LCL filter, the DC-link voltage, and the PMSG. A generalized integral state feedback internal model control is then used to form a multi-input/multi-output (MIMO) control structure. The H∞ loop shaping synthesis methodology is proposed to damp the oscillations, achieve robust performance by minimizing the effect of external disturbances on the output variables. The design for a robust H∞ control loop shaping with Kalman filter scheme enhanced by the D-stability technique using a Linear Matrix Inequality (LMI) approach design process is disclosed in Figure 9.

Mixed-sensitivity loop shaping allows to design an H∞ controller by simultaneously shaping the frequency responses for tracking and disturbance rejection, noise reduction and robustness, and controller effort. This technique is a useful way to balance the necessary trade-off between performance and robustness. To use this technique, three weighting functions must be chosen to shape the frequency responses for 1) tracking and disturbance reduction 2) controller effort and 3) noise reduction and robustness. The selection of weighting functions is the key part the robust H∞ mixed-sensitivity loop shaping controller which depends on the following properties, where T is the closed-loop transfer function and S is the sensitivity transfer function.

In closed-loop systems, these two transfer functions always complement each other as T + S = 1.

Small sensitivity gains leads to efficient disturbance attenuation in lower frequencies while small closed-loop transfer function helps to attenuate the high-frequency noises. Thus, ideally, one aims to achieve S ≈ 0 at low frequencies and T ≈ 0 at high frequencies. This can be accomplished by precisely designing frequency-dependent weight functions with the following goals:

$$\|W_1 S\|_\infty < 1$$

$$\|W_2 K S\|_\infty < 1$$

$$\|W_3 T\|_\infty < 1$$

The zero-dB crossover frequency of 1/W1 is greater than 1/W3. Both of these weighting functions are selected as:

[Math. 11]

$$W_1 = k \cdot \frac{\frac{s}{M} + w_0}{s + w_0 A}$$

[Math. 12]

$$W_3 = g \frac{s + \frac{w_0}{M}}{As + w_0}$$

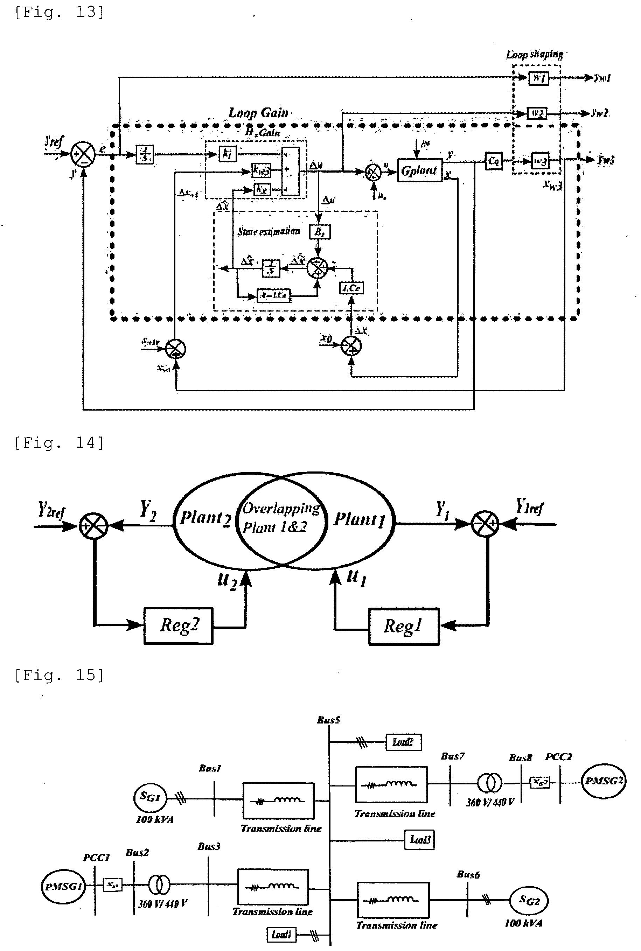

where M is the peak value of both sensitivity functions which is responsible for the robustness of the controller, A is the maximum acceptable fixed offset value which is normally not greater than 1. The large bandwidth can give more capability to reject disturbances which is denoted by $w_0$ rad/sec, while k and g are regulation values to regulate the bode plots of $W_1$ and $W_3$. The weight $W_1$ is usually used to improve reference tracking and disturbance rejection. However, in our case, the integral action structure in Figure 13 discussed below is perfectly fit for zero-error reference-tracking based on internal model principle.

Also, to comply with H∞ optimization to minimize the norm from disturbance to output error, which is the best way for disturbance rejection, $W_1$ is chosen as unit gain: $W_1 = 1$. As in our situation, there is no particular need for limiting control effort in a particular frequency band, to simplify the control structure, $W_2$ will be ignored: $W_2 = 0$.

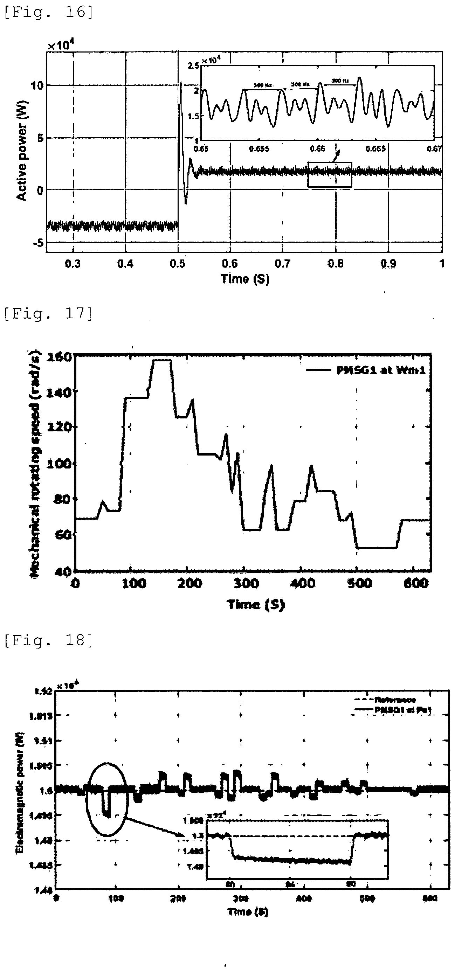

The systems has a low-frequency oscillations from Figure 16, to damp the low-frequency oscillations. We need to choose weight $W_3$.

Designing the weight function $W_3(s)$ is carried out by specifying three points: (1) the initial gain at lowest frequency, (2) the ultimate gain at highest frequency and (3) a gain attributed to a middle frequency. These three points are chosen such that the desired frequency behavior of the sensitivity function is achieved. The desired frequency bandwidth is, in fact, selected to attenuate the oscillation with high frequencies appearing in the output power and as harmonics in the injected currents. The selection of weight $W_3$ will improve high-frequencies roll-off in order to cancel the oscillatory effect of LCL filters. Indeed, it is well-known that these filters provide poor damped oscillatory modes at low frequency, around 300 Hz in the case of our system. As this frequency is much higher than the one related to the very last part of our control, roll-off improvement via loop-shaping will be sufficient. The structure of the filter w3 is standard by its state representation, Cq was chosen to target the output of this block.

[Math. 13]

$$C_q = \begin{bmatrix} 1 & 0 & 0 \\ 0 & 1 & 0 \\ 0 & 0 & 1 \end{bmatrix}$$

$$\begin{cases} \Delta \dot{x}_{w3} = A_{w3} \Delta x_{w3} + B_{w3} C_q' C \Delta x \\ \Delta y_{w3} = C_{w3} \Delta x_{w3} + D_{w3} C_q' C \Delta x \end{cases}$$

An augmented system for control design is now discussed.

The operating point of the nonlinear model is considered from [Math. 5] as follows:

[Math. 14]

$$\begin{cases} x_0 = \begin{bmatrix} i_{sd0} & i_{sq0} & w_{m0} & v_{dc0} & i_{d10} & i_{q10} & i_{d20} & i_{q20} & v_{cfd0} & v_{cfq0} & w_{f0} \end{bmatrix}^T \\ u_0 = \begin{bmatrix} m_{d10} & m_{q10} & m_{d20} & m_{q20} \end{bmatrix}^T \end{cases}$$

Theoretically, consider $\omega = \omega_0 = 100\pi$ and the grid voltage $V_{abc}$ are constant but in practice grid voltage variations occur. To enhance the system performance, it is crucial to incorporate disturbance attenuation in control synthesis. This will effectively minimize the impact of frequency and grid voltage fluctuations. The ultimate goal is to achieve asymptotic tracking of the output reference.

[Math. 15]

$$e = -y + y_{ref} = -Cx + y_{ref}$$

where $y_{ref} = [P_{e1r} \ V_{dc1r} \ Q_{1r}]^T$. The controller design focuses on achieving tracking of a step reference input while maintaining zero steady-state error.

$$\Delta x = [x] - [x_0]$$

$$\Delta u = [u] - [u_0]$$

The linearized system from the physical system equation [Math. 10]:

[Math. 16]

$$\begin{cases} \Delta \dot{x} = A\Delta x + B_1 \Delta u + B_2 \Delta w \\ \Delta y = e = C\Delta x + D_1 \Delta u + D_2 \Delta w \end{cases}$$

To achieve the tracking, the internal model principle disclosed in Bishop, R. C. D. R. H. (2011), Modern control systems, is employed. The augmented state system derived from the physical system of [Math. 16] and mixed loop shaping of [Math. 13], the augmented matrices are:

[Math. 17]

$$\begin{cases} \Delta \dot{x}_{au} = A_{au}\Delta x_{au} + B_{1au}\Delta u_{au} + B_{2au}\Delta w_{au} \\ \Delta y_{au} = \begin{bmatrix} e \\ y_{w3} \end{bmatrix} = C_{au}\Delta x_{au} + D_{1au}\Delta u_{au} + D_{2au}\Delta w_{au} \end{cases}$$

$$\Delta x_{au} = \begin{bmatrix} \Delta \dot{x} \\ \Delta \dot{x}_3 \\ e \end{bmatrix}, \Delta u_{au} = \Delta \dot{u}, \ \Delta w_{au} = \Delta \dot{w}$$

$$A_{au} = \begin{bmatrix} A & 0 & 0 \\ B_{w3}C_qC & A_{w3} & 0 \\ -C & 0 & 0 \end{bmatrix}, B_{1au} = \begin{bmatrix} B_1 \\ 0 \\ 0 \end{bmatrix}$$

$$B_{2au} = \begin{bmatrix} B_2 \\ 0 \\ 0 \end{bmatrix}, C_{au} = \begin{bmatrix} -C & 0 & 0 \\ D_{w3}C_qC & C_{w3} & 0 \end{bmatrix}$$

$$D_{1au} = \begin{bmatrix} D_1 \\ 0 \end{bmatrix}, D_{2au} = \begin{bmatrix} D_2 \\ 0 \end{bmatrix}$$

The stabilization of [Math. 17] will guarantee the needed tracking performance.

The D-stability technique is now discussed.

To calculate the gain K (as shown in [Math. 33] below) with desired closed-loop characteristics, the closed-loop poles need to be within a specific region, typically limited within a disk region. The general LMI region is characterized by the stability of matrix $A \in R^{n \times n}$ within a D(q, r) stable range. This condition is met if there exists a matrix $X \in S^n$, thereby satisfying the LMI region.

Here, $X_P$ is a symmetric positive definite matrix representing the state feedback gain, $A_{au}$ and $B_{1au}$ are system matrices and W represents the weighting matrix associated with the disturbance rejection term. These LMI form a set of conditions that need, to be satisfied to ensure stability and desired performance of the closed-loop system in the D-stability technique.

[Math. 18]

$$\begin{bmatrix} -rX_P & qX_P + A_{au}X_P + B_{1au}W \\ qX_P + A_{au}X_P + B_{1au}W & -rX_P \end{bmatrix} < 0$$

As shown in Fig. 10, the LMI region $D_{(q,r)}$ exhibits convexity and symmetry around the real axis. To constrain the closed-loop time constant $\tau_{closed-loop}$ within a range to that of vector control and to ensure closed-loop eigenvalues are placed within a circular region, the closed-loop poles are confined within the circular LMI disk from Fig. 10.

The H∞ LMI control with D-stability is now discussed.

The influence of the disturbance $\Delta w_{au}$ to the output $y_{w3}$:

[Math. 19]

$$\Delta y_{w3} = G(s)\Delta w_{au}$$

[Math. 20]

$$G(s) = (C_{au}X_P + D_{1au}K)(sI - (A_{au} + B_{1au}K))^{-1} B_{2au}$$

It is obvious (see Duan, G. R.,& Yu, H. H. (2013), LMIs in control systems: analysis, design and applications, CRC press) that:

[Math. 21]

$$\|\Delta y_{w3}\| \leq \|G(s)\|_\infty \leq \|\Delta w_{au}\|$$

To find the gain K for augmented system equation [Math. 17] with closed-loop pole belonging to the LMI region $D_{(r,q)}$ equation [Math. 18], the H∞ problem is introduced and its theorem is proposed as follows.

Problem 1: For the linear system of equation [Math. 17], the H∞ problem is to design a state feedback control law $\Delta u_{au} = K\Delta x_{au}$ such that:

[Math. 22]

$$\|G(s)\|_\infty \leq \gamma$$

holds for a given positive scalar $\gamma$ (where

$$G(s) = \frac{\Delta y_{w3}(s)}{\Delta w_{au}(s)}$$

). Theorem 1: If and only if a matrix $W_P$ and a symmetric positive definite matrix $X_P$ exist, the aforementioned H-infinity problem 1 can be solved using the LMI-based minimization technique.

$$\underset{X_P, W_P}{minimize} \quad \gamma \quad \text{subject to}$$

$$\begin{cases} \begin{bmatrix} \Psi & B_{2au} & (C_{au}X_P + D_{1au}W_P)^T \\ B_{2au}^T & -\gamma I & D_{2au}^T \\ C_{au}X_P + D_{1au}W_P & D_{2au} & -\gamma I \end{bmatrix} < 0 \\ \Psi = (A_{au}X_P + B_{1au}W_P)^T + A_{au}X_P + B_{1au}W_P \end{cases}$$

The matrix gain K can be recovered as:

[Math. 23]

$$K = W_P X_P^{-1}$$

The LMI conditions are then written in MATLAB® using YALMIP toolbox (see Lofberg, J. (2004, September), YALMIP: A toolbox for modeling and optimization in MATLAB®, in 2004 IEEE international conference on robotics and automation (IEEE Cat. No. 04CH37508) (pp. 284-289), IEEE), and is solved by MOSEK solver (see ApS, M. (2019), Mosek optimization toolbox for MATLAB®, User's Guide and Reference Manual, Version, 4.).

The loop gain for MIMO system is now discussed:
The loop gain is calculated for single input and single output (SISO) L = KG, where K controller gain, G is dynamics system plant from output. For a multiple input and multiple output (MIMO) system, the loop gain calculation is more complex. It involves matrix operations and considering the interactions between multiple inputs and outputs. The calculation of the loop gain for a MIMO system requires the extension of the system to account for these interactions.

Specifically, the new extended system involves the loop gain transfer from output ($y_{w3}$) to error (e), regulator represents in from Figure 13 and the equation is from [Math. 33] below. $\Delta u$ represents:

[Math. 24]

$$\Delta u = k_x \Delta x + k_{w3} \Delta x_{w3} + k_i e_i$$

The full control gain is K = [$k_x$ $k_{w3}$ $k_i$], $\Delta u$ substitute from the equation [Math. 10]

[Math .25]

$$\begin{cases} \Delta \dot{x} = A\Delta x + B_1(k_x \Delta x + k_{w3} \Delta x_{w3} + k_i e_i) \\ y = C\Delta x \end{cases}$$

$$x_{OL} = \begin{bmatrix} \Delta x \\ \Delta x_{w3} \\ e_i \end{bmatrix}, e_i = \int edt, \quad \dot{e}_i = e$$

The form of the new system for loop gain transfer is derived from the equation:

$$\Delta \dot{x_{OL}} = \begin{bmatrix} A + B_1 k_x & B_1 k_{w3} & B_1 k_i \\ B_{w3} C_q & A_{w3} & 0 \\ 0 & 0 & 0 \end{bmatrix} \begin{bmatrix} \Delta x \\ \Delta x_{w3} \\ e_i \end{bmatrix} + \begin{bmatrix} 0 \\ 0 \\ I \end{bmatrix} e$$

$$y_{OL} = \begin{bmatrix} C & 0 & 0 \end{bmatrix} \begin{bmatrix} \Delta x \\ \Delta x_{W3} \\ e_i \end{bmatrix}$$

The form of loop gain transfer state space approach representation is:

[Math .26]

$$\begin{cases} \Delta \dot{x_{OL}} = A_{OL} \Delta x_{OL} + B_{OL} \\ y_{OL} = C_{OL} \Delta x_{OL} \end{cases}$$

The matrix represents:

$$A_{OL} = \begin{bmatrix} A + B_1 k_x & B_1 k_{w3} & B_1 k_i \\ B_{w3} C_q & A_{w3} & 0 \\ 0 & 0 & 0 \end{bmatrix}, B_{OL} = \begin{bmatrix} 0 \\ 0 \\ I \end{bmatrix},$$

$$C_{OL} = \begin{bmatrix} C & 0 & 0 \end{bmatrix}, D_{OL} = \begin{bmatrix} 0 & 0 \\ 0 & 0 \end{bmatrix}$$

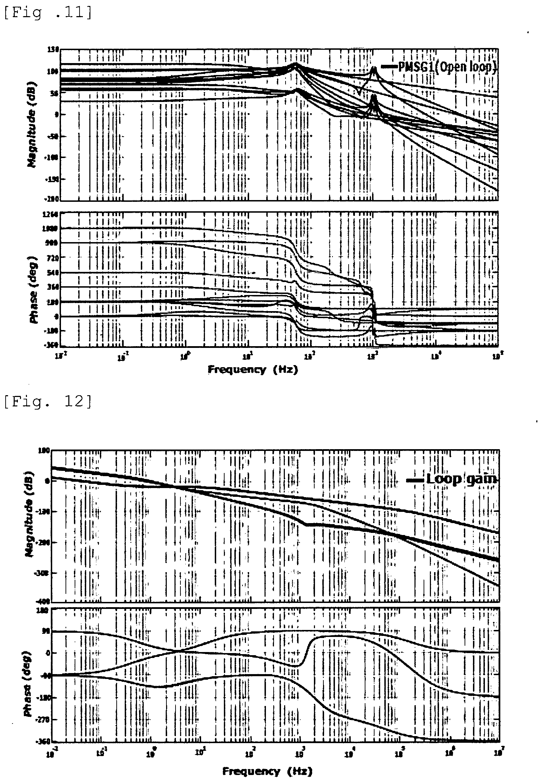

Based on the loop gain transfer for MIMO system from [Math. 26], the open loop bode plot for plant (PMSG1) presenting LCL resonance frequency at 1525 Hz is represented in Figure 11. The state-space feedback with integral control is designed based on the loop gain calculated from Figure 13 discussed below. This design approach incorporates H∞ control techniques with loop shaping to ensure robust performance across a wide range of operating conditions. In the design process, the frequency weight $w_3$ from equation [Math. 3] was carefully tuned. The primary objective of this tuning was to achieve significant attenuation of medium and high frequency components, particularly those above 300 Hz. This attenuation is crucial for minimizing the influence of high-frequency disturbances and noise on the control system's performance. The resulting loop gain, after incorporating the tuned frequency weight exhibits a favorable frequency response, as depicted in the Bode plot shown in Fig. 12. The Bode plot provides a comprehensive visualization of the system's gain and phase across different frequencies, highlighting the effectiveness of the H∞ control design in shaping the loop gain to achieve the desired attenuation characteristics.

State estimation is essential in control theory and signal processing for determining the internal state of a system when direct measurements are either impossible or noisy. The Kalman Filter is an efficient, recursive algorithm that optimally estimates the state of a linear dynamic system from a series of noisy observations. This filter combines all available measurements, knowledge of the system dynamics, and statistical information about measurement and process noise to produce estimates that tend to be closer to the true state. From this base set of observers, there have been a few key advances. The advance in modern control theory has been made by formulating the problem with disturbances in mind. These methods minimize a cost function based on mathematical assumptions about disturbances, however, the design complexity has substantially increased. Butterworth filters are commonly used to manage power and reactive power in DC/AC converter systems. However, they are often not included in the control model, which can negatively impact control design. Even when these filters are included, they can alter the closed-loop poles that are precisely placed by the loopshaping controller to achieve the desired frequency performance and avoid oscillations in output power and harmonics in the currents.

Instead, a Kalman filter is presently designed which, thanks to the separation principle, does not interfere with the nominal robust H∞ loop-shaping controller and maintains the desired frequency response. At the same time, it effectively removes potential high-frequency noise from measurements by limiting the upper frequency bound. The Kalman filter is optimal in terms of balancing the measurements and the mathematical model. However, an accurate tuning process is necessary to achieve the optimal bandwidth. Suppose the system dynamics and measurement model are given by:

[Math. 27]

$$\begin{cases} \Delta \dot{x} = A \Delta x + B_1 \Delta u + w_N(0, Q) \\ \Delta y = C_e \Delta x + v_N(0, R) \end{cases}$$

where A is the state matrix of the dynamics system, $B_1$ is the control matrix, $C_e$ is the output matrix. The Kalman Filter (KF) aims to estimate $\Delta \hat{x}$ such that the error is minimized:

$$KF : \{\Delta u, \Delta y, A, B_1, C_e, \text{cov}(w_N), \text{cov}(v_N)\} \to \{\Delta \hat{x}\} \quad \text{s.t.} \quad \min \|\Delta x - \Delta \hat{x}\|_2$$

the Kalman gain (L), and the state estimation update equation are presented as:

[Math. 28]

$$L = P C_e^T R^{-1}$$

[Math. 29]

$$\begin{cases} \Delta\dot{\hat{x}} = A\Delta\hat{x} + B_1\Delta u + L(\Delta y - \Delta\hat{y}) \\ \Delta\hat{y} = C_e\Delta\hat{x} \end{cases}$$

[Math. 30]

$$\Delta\dot{\hat{x}} = A\Delta\hat{x} + B_1\Delta u + L(C_e\Delta x - C_e\Delta\hat{x})$$

[Math. 31]

$$\Delta\dot{\hat{x}} = (A - LC_e)\Delta\hat{x} + B_1\Delta u + LC_e\Delta x$$

where P is obtained from the Riccati differential equation:

[Math. 32]

$$AP + PA^T - PC_e^T R^{-1} C_e P + Q = 0$$

Where Q,R are the covariances of the process and measurement noises, respectively.

In order to derive an optimal estimator, a few mathematical assumptions are made about the unknown disturbance. First, the model must be sufficiently accurate. Second, disturbances are stochastic, zero mean, and Gaussian (no time correlation) with known input and output noise covariances $Q = cov(w_N(0,Q))$ and $R = cov(v_N(0,R))$. From these assumptions, the Kalman Filter KF minimizes the 2-norm of the estimation error (see Wang, L., & Guan, R. P. (2022), State feedback control and Kalman filtering with MATLAB®/Simulink® tutorials, John Wiley & Sons). This stabilizes the closed loop which has the following separation property:

$$\chi(S_t) = \underbrace{\chi(A_{au} + B_{1au}K)}_{\text{control dynamics}} \cup \underbrace{\chi(A - LC_e)}_{\text{estimation dynamics}}$$

Where $\chi(S_t)$ stands for the eigenvalue set of the aggregate closed-loop system including the controller and the KF. $A_{au}$ and $B_{1au}$ are augmented system matrices for the controller, K is the H∞ controller gain, and L is the observer gain. The implementation of state estimation using KF is shown in Figure 13.

Concerning the tuning procedure, the ratio between the measurement noise covariance R and the process noise covariance Q are playing the key role to tune the frequency behavior of the Kalman filter. Larger R to Q ratios puts higher reliance on the noisy measurements providing a large bandwidth while for smaller R to Q ratios, Kalman filter relies more on the mathematical model restricting the bandwidth. The tuning process is designed based on this ratio.

Where the designer should decrease the ratio until the oscillations on the output power remains at a reasonable level.

For controller implementation, the implemented MIMO controller is depicted in Figure 8 where $G_{plant}$ represents the aggregated dynamics of the system (one PMSG, AC-DC, dc-link, DC-AC, LCL Filter). The H∞ control gain calculated K = [kx kxw3 ki] from equation [Math. 23], where $k_x$ is the proportional gain, $k_{xw3}$ is the loop shaping gain, $k_i$ is the integral gain. $w_1$, $w_2$ and $w_3$ are frequency weights. The state of the frequency weight $w_3$ is represented by $x_{w3}$, while the operating weight of $w_3$ is denoted as $x_{w30}$. $\Delta w$ is system disturbances, L is the observer gain and estimates $\Delta x$ as $\Delta\hat{x}$. The state-feedback controller of augmented system [Math. 17] is $\Delta_{uag} = K\Delta x_{ag}$, the controller of system [Math. 16] can now be recovered as:

[Math. 33]

$$\Delta u = K \begin{bmatrix} \Delta \hat{x} \\ \Delta x_{u3} \\ \int edt \end{bmatrix} \Rightarrow u = \Delta u + u_0$$

Figure 13 represents a schematic version of an implementation of a multivariable for H∞ loop shaping with state estimation as discussed above.

Centralized versus decentralized implementation is now discussed.

Concerning centralized synthesis, if the DVPP consists of n generators with n > 1, Plant 0 is considered to be the set of the n RES generators as shown in Figure 2 and the same synthesis as given in section above is performed to compute the gains of the controllers.

This leads to a coordinated control of the DVPP. It provides a maximum of performances and robustness but needs distant measurements (from each generator of the DVPP) and, once computed, the controls should be sent back to each generator. Moreover, when one or some generators are shut down (for lack of natural resources for example), the control should be reconfigured (ie the gains should be resynthesized with the new control model). Such control is thus recommended for DVPPs with one or few generators spread on a small geographical zone.

Concerning decentralized synthesis, in case of a large number of generators or a DVPP spread on a large geographical zone, the decentralized implementation of the DVPP control in Figure 3 is recommended. It consists of n parallel synthesis of a regulator for each generator based on the overlapping control principle recalled in Figure 14, where two plants Plant 1 and Plant 2, each control by a respective regulator Reg1 and Reg2 have an overlapping control due to the fact that Plant 1 and Plant 2 interact on the same electrical grid. An example of such situation is given in Fig. 15 where the DVPP consists of two permanent synchronous generators PMSG1 and PMSG2 connected to an electrical grid represented by Bus5 with loads Load1, Load2 and Load3 and synchronous generators SG1 and SG2.

The decentralized implementation is based on the overlapping state model of the augmented system for two PMSGs which is of the form:

[Math. 34]

$$(I) \begin{cases} \dot{X}_1 = A_1 X_1 + B_1^1 U_1 + B_2^1 W_1 \\ Y_1 = C_1 X_1 \end{cases}$$
$$(II) \begin{cases} \dot{X}_2 = A_2 X_2 + B_1^2 U_2 + B_2^2 W_2 \\ Y_2 = C_2 X_2 \end{cases}$$

where the outputs Y1, Y2 (of PMSG1, PMSG2, respectively) are:

$$\begin{cases} Y_1 = \begin{bmatrix} P_{e1} & v_{dc1} & Q_1 \end{bmatrix}^T \\ Y_2 = \begin{bmatrix} P_{e2} & v_{dc2} & Q_2 \end{bmatrix}^T \end{cases}$$

and the considered disturbances

$$\begin{cases} W_1 = \begin{bmatrix} V_{rd1} & V_{rq1} & P_{L1} \end{bmatrix}^T \\ W_2 = \begin{bmatrix} V_{rd2} & V_{rq2} & P_{L2} \end{bmatrix}^T \end{cases}$$

The latter choice of the disturbances follows the same concept used above for the centralized implementation. In addition, the voltages at the grid connection points of the two generators are also considered in order to enhance decoupling of the two generators. The states of the 2 PMSGs are:

$$\begin{cases} X_1 = [i_{sd1}, i_{sq1}, \omega_{m1}, v_{dc1}, i_{d1}, i_{q1}, i_{dg1}, i_{qg1}, v_{cfd1}, v_{cfq1}, \omega_f]^T \\ X_2 = [i_{sd2}, i_{sq2}, \omega_{m2}, v_{dc2}, i_{d2}, i_{q2}, i_{dg2}, i_{qg2}, v_{cfd2}, v_{cfq2}, \omega_f]^T \end{cases}$$

The control gains are obtained for each augmented subsystem for PMSG1 and PMSG2 following the same path as disclosed above.

Validation results were obtained.

The open-loop simulations shown in Figure 16 are run with detailed models (switching one for the converter) and show a 300 Hz oscillation with a higher magnitude, significantly impacting system stability and performance.

To address such low-frequency oscillations, an H∞ loop shaping technique combined with a Kalman filter is proposed, as detailed below.

To evaluate the performance of the designed H∞ loop shaping with the Kalman filter controller, it is necessary to mimic scenarios that closely resemble real situations for the PMSG-based system connected to a grid. The mechanical rotating speed mimics the characteristic wind speed. Real-time simulations are carried out using the OPAL-RT OP5700. The validation includes two PMSGs, PMSG1 and PMSG2, two synchronous generators each with a capacity of 100 kVA and linear loads, and a grid frequency of 50 Hz with a voltage of 440 V decide the synchronous generators are as shown in Figure 15. PMSG1 is connected at PCC1, and similarly, PMSG2 is connected at PCC2. The scenarios considered are: 1 - variable mechanical speed of the generator, 2 - step changes in the desired electromagnetic power, and 3 - a three-phase short-circuit fault in the nearby bus and 4 - a step increases in load are discussed.

1 - Variable mechanical speed of the generator

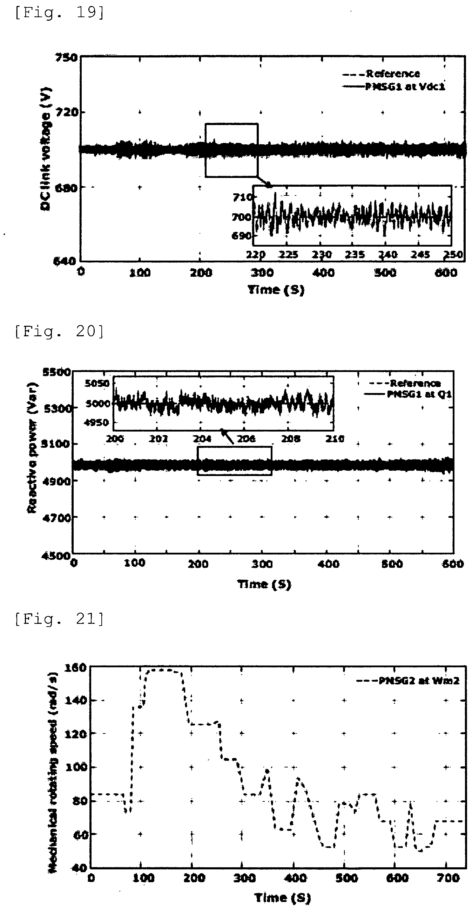

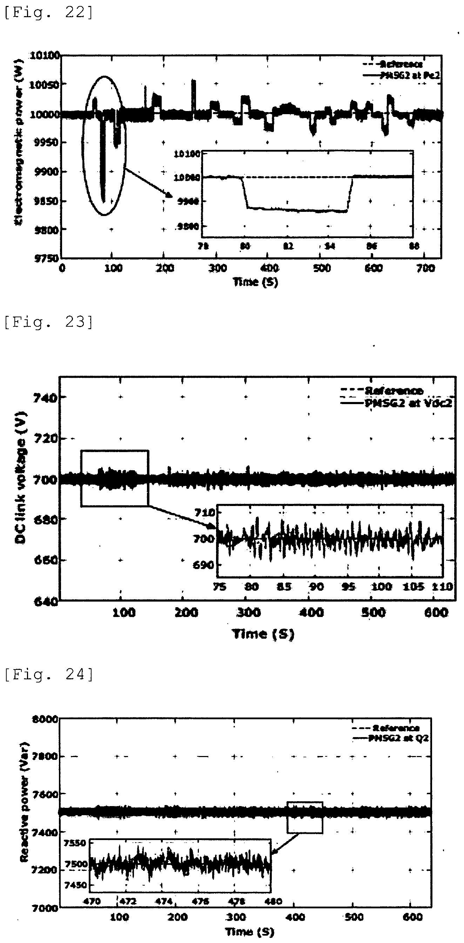

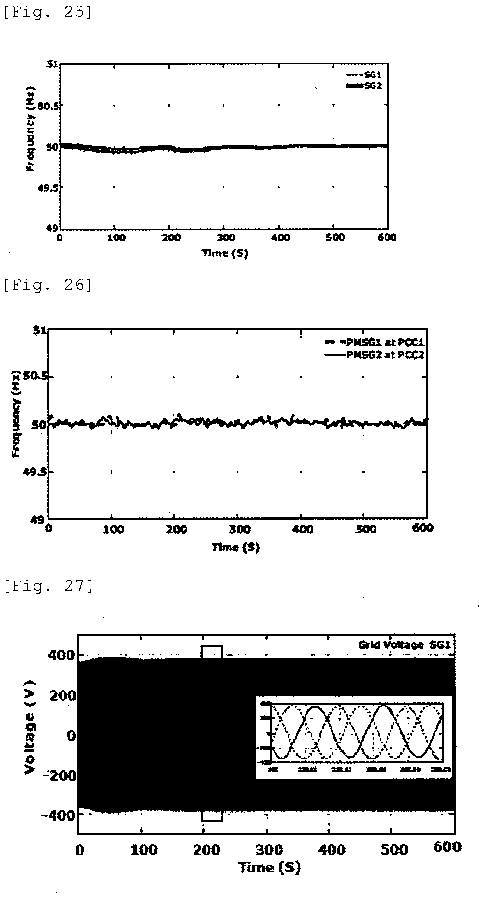

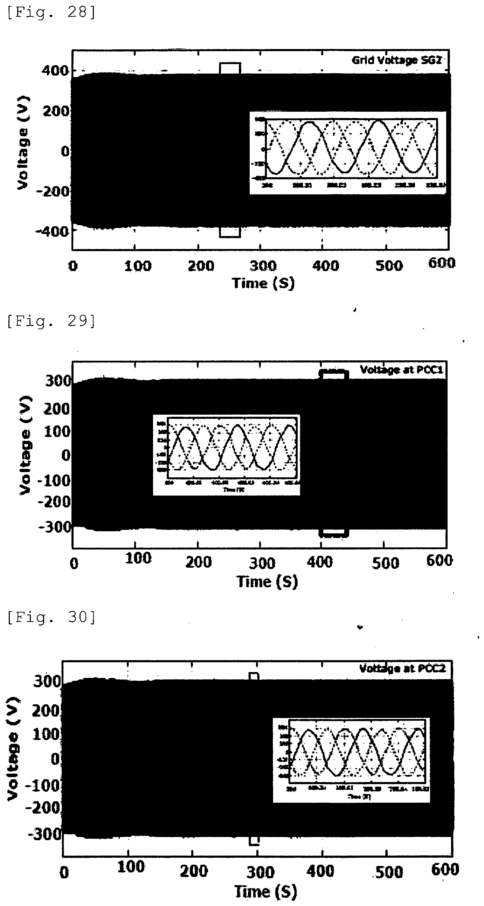

To evaluate the performance of the proposed control method, the influence of variations in the two generators' speeds is studied, as these occur in reality due to changes in wind speed. In wind turbines, the wind speed changes the mechanical torque, leading to a change in rotor speed. The mechanical rotating speeds ($w^{m1}$) and ($w^{m2}$) start from zero and vary over time, as shown in Figure 17. The control system is designed to maintain the actual electromagnetic power ($P_{e1}$) as follows the reference power of 15 kW, as illustrated in Figure 18. Similarly, the DC-link voltage ($V_{dc1}$) remains constant at 700 V, as shown in Figure 19, and the grid-side reactive power ($Q_1$) is maintained as reference value at 5 kVAR, as shown depicted in Figure 20. The H∞ control method demonstrates good robustness to speed variations. For instance, when a sudden speed increases, decrease causes spikes in electromagnetic power ($P_{e1}$) and DC-link voltage ($V_{dc1}$), the H∞ control method manages well these disturbances, resulting in small power overshoots and limited oscillations in reactive power injection. Similarly, PMSG2 the electromagnetic power ($P_{e2}$) maintains a reference power of 10 kW, as shown in Figure 22. The DC-link voltage ($V_{dc2}$) remains constant at 700 V, as shown in Figure 23, and the grid-side reactive power ($Q_2$) is maintained at 7 kVAR, as shown in Figure 24. Same behaviour is noticed for the electromagnetic power ($P_{e2}$) and Dclink voltage ($V_{dc2}$). The speeds of synchronous generators are maintained constant as observed in Figure 25 (represented as frequency in Hz). Also, grid frequency ($w_f$) measured using PLL at PCC1 and PCC2 is constant as seen in Figure 26 (waveform represented by Hz). The grid voltage of the two synchronous generators is constant at a phase-neutral voltage of 359.25 V (440^2/^3), as shown in Figure 27 and Figure 28. Similarly, the PMSG1 and PMSG2 connections at PCC1 and PCC2 maintain a constant phase-neutral voltage of 293.93 V (360√2/√3), as shown in Figure 29 and Figure 30. The grid voltage of the two synchronous generators is constant at a phase-neutral voltage of 359.25 V (440√2/√3), as shown in Figure 27 and Figure 28. Similarly, the phase-neutral voltage at the connections of PMSG1 and PMSG2 at PCC1 and PCC2 is maintained 293.93 V (360√2/√3), as shown in Figure 29 and Figure 30.

2 - Step changes in the desired electromagnetic power

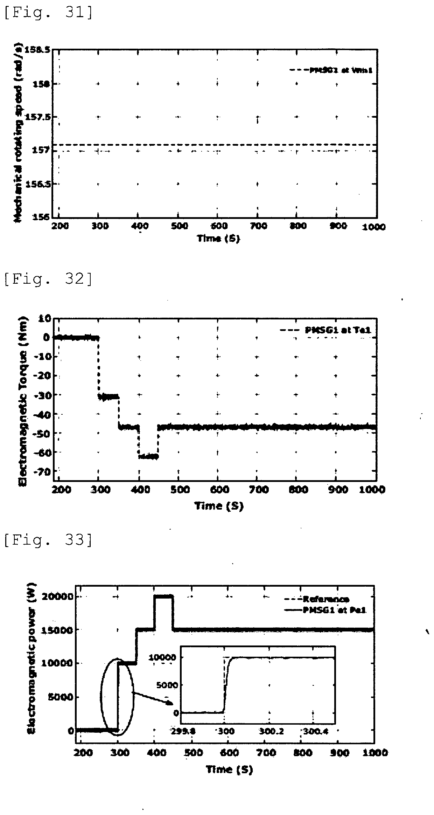

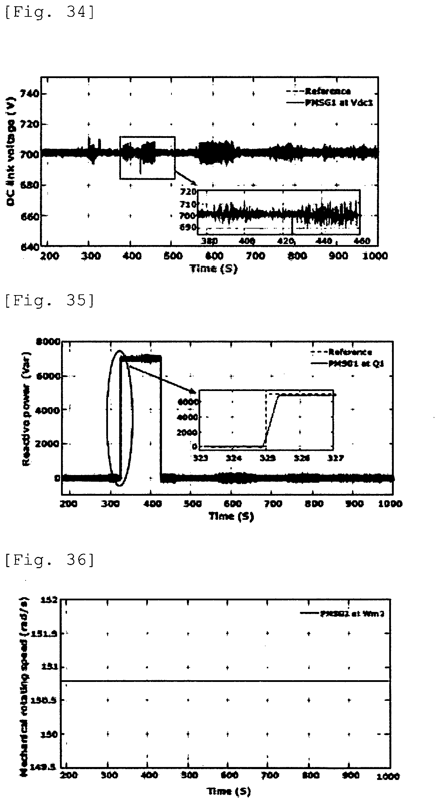

The sequence of step changes in the desired electromagnetic power supplied to the grid. It is assumed that the machine is running at a constant mechanical speed ($w_{m1}$) of 157 rad/s (Figure 31). The reference electromagnetic power for PMSG1 starts at zero. At t = 300 s, there is an increase of 10 kW, followed by increments of 5kW at t = 350 s and t = 400 s. This shows the response to step changes in electromagnetic power ($P_{e1}$) as observed in Figure 33, the actual electromagnetic power closely follows the reference power. When the electromagnetic power increases, the electromagnetic torque ($T_{e1}$) also increases, as shown in Figure 32. The DC-link voltage follows the reference voltage (700 V) as shown in Figure 34. Moreover, to examine the performance of the proposed control for different levels of desired reactive power, the demand was increased for the reactive power from 0 to 7 kVAR at t = 325 s. As seen in Figure 35, the reactive power closely follows the step change in the reference value. Moreover, it can be observed that with a step change in electromagnetic power, DC-link voltage, reactive power low-frequency oscillations are well damped.

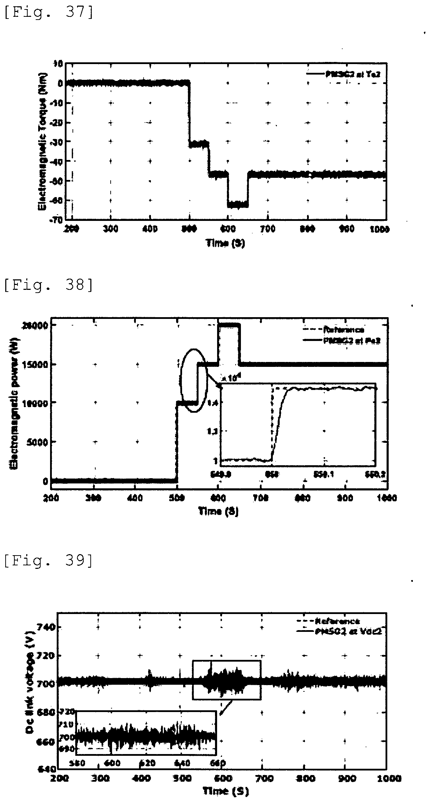

Similarly, the PMSG2 starts with zero electromagnetic power reference and, at t = 500 s, there is a 10 kW increase, followed by increments of 5 kW at t = 550 s and 600 s. Similarly for PMSG2, the machine is running at a constant mechanical speed ($w_{m2}$) of 150.7 rad/s. Figure 31 shows the response to step changes in electromagnetic power ($P_{e2}$). It is

observed from Figure 38 that the actual electromagnetic power closely follows the reference power.

When the electromagnetic power increases, the electromagnetic torque ($T_{e2}$) also increases as shown in Figure 37. The DC-link voltage follows the reference voltage at 700 V ($V_{dc2}$) Figure 39. Moreover, to examine the performance of the proposed control for different levels of desired reactive power, the demand was increased for the reactive power ($Q_2$) from 0 to 5 kV AR at t = 575 s.

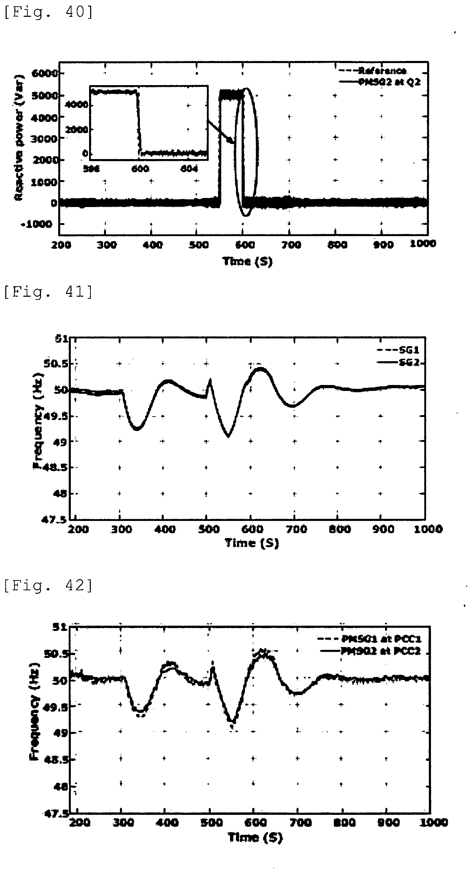

As seen in Figure 40, the reactive power closely follows the step change in the reference value. Moreover, it can be observed that during step changes in electromagnetic powers and reactive powers, the speed of the synchronous generators response changes between 49.8 Hz to 50.4 Hz as shown Figure 41 and the grid frequency ($w_f$) at PCC1, PCC2 in Figure 42.

3 - Three-phase short-circuit fault in the nearby bus

In this scenario, both machines operate at steady-state mechanical speeds.

PMSG1 runs at $\omega_{m1}$ = 157 rad/s, and PMSG2 operates at $\omega_{m2}$ = 150.7 rad/s.

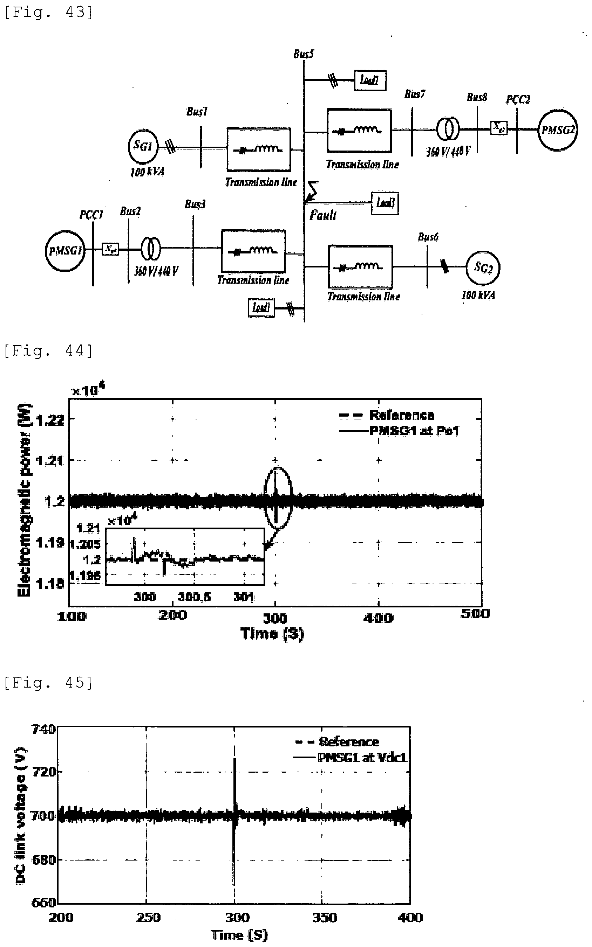

A 3-phase short-circuit fault is applied in the middle of bus 5, as shown in Figure 43. The actual electromagnetic power $P_{e1}$ for PMSG1 is 12 kW, with a constant DC-link voltage $V_{dc1}$ of 700 V and a reactive power Q1 of 3 kVAR. Figures 44, 45 and 46 represent respectively electromagnetic power, DC link voltage and reactive power of PMSG1 of Figure 43 during fault.

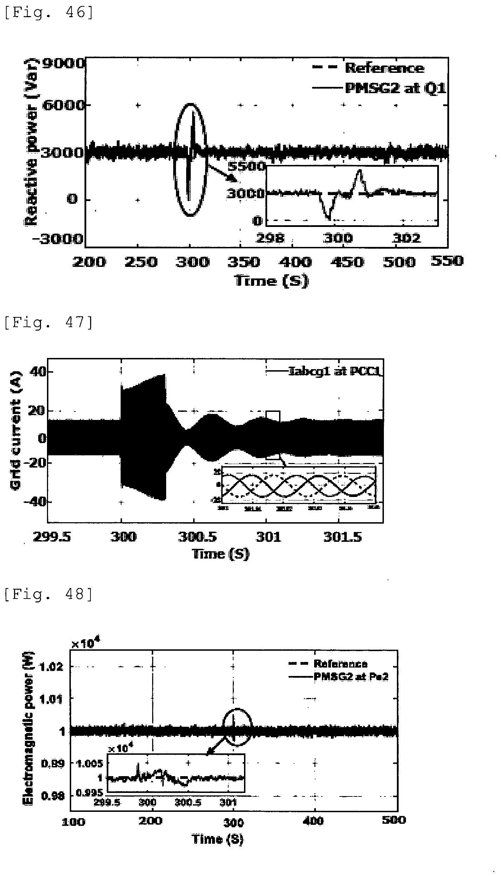

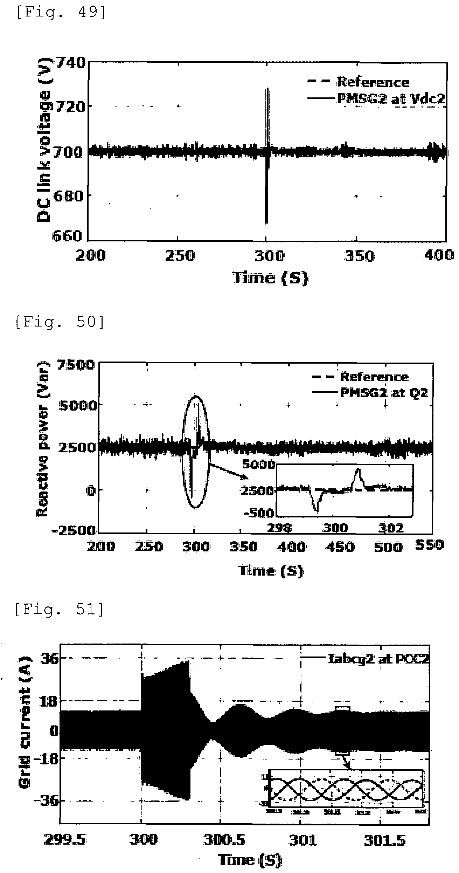

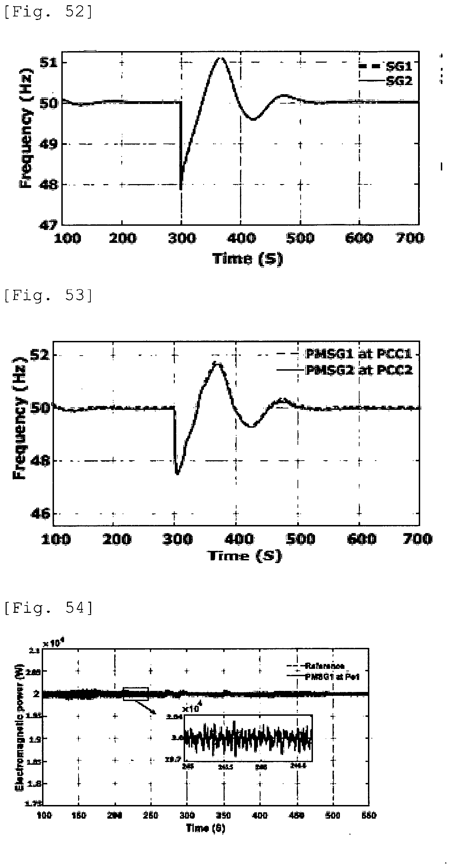

The fault occurs at t = 300 s and is cleared at t = 300.3 s. During the fault, $P_{e1}$, $V_{dc1}$, and $Q_1$ spike at t = 300 s, but the grid current $I_{abcg1}$ at PCC1 increases within acceptable limits (Figure 47). For PMSG2, the reference electromagnetic power $P_{e2}$ is 10 kW, and the reference reactive power $Q_2$ is 2.5 kVAR. Similar performance is observed for PMSG2 (Figures 48, 49, 50, 51), with spikes during the fault that stabilize shortly after. The speed of the synchronous generators increases from 48 Hz to 51 Hz during the fault (Figure 52). The grid frequency $\omega_f$ at PCC1 and PCC2 also rises from 48.3 Hz to 51.7 Hz during the fault. After the fault is cleared at t = 300.3 s, the control strategy restores the system to normal. The synchronous generators' speed and grid frequency at PCC1 and PCC2 return to their nominal values, stabilizing at 50 Hz (Figure 53), demonstrating effective fault mitigation and the return of system stability.

4 - Step increase in load

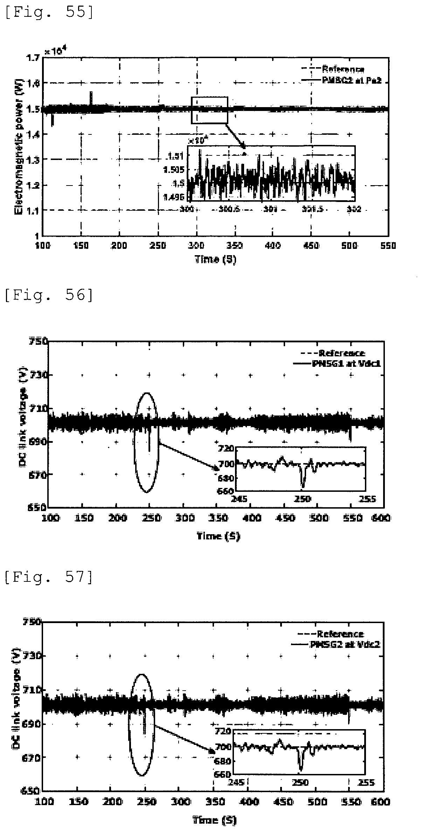

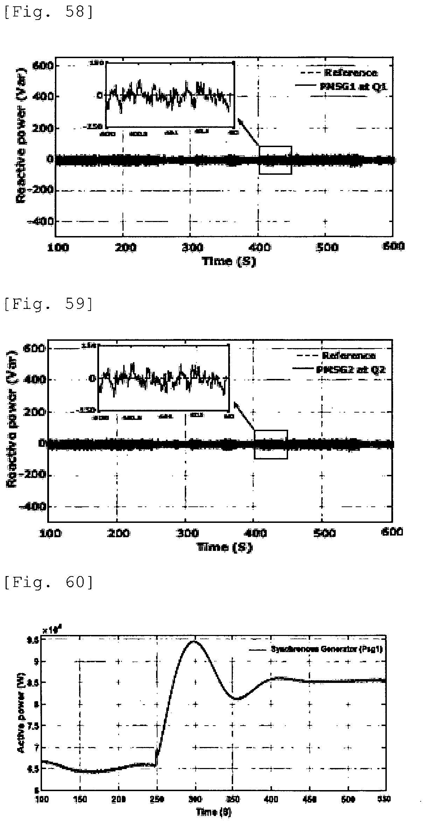

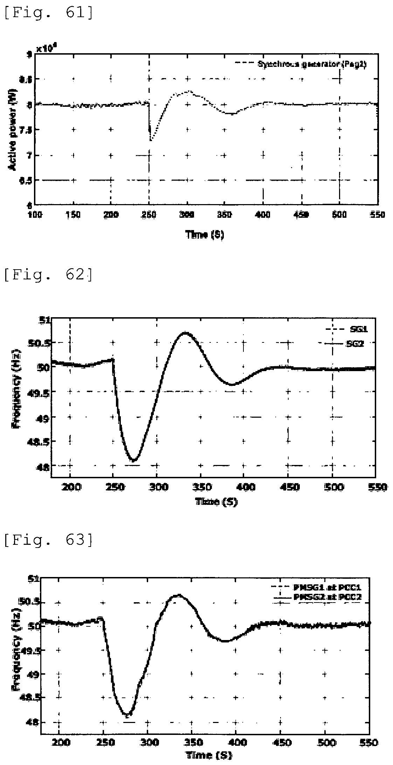

Initially, a total load of 80 kW (Load 1 and Load 2) is turned on. The machines are assumed to be running at constant mechanical speeds ($w_{m1}$) of 157 rad/s and ($w_{m2}$) of 150.7 rad/s. The PMSG1, PMSG2 electromagnetic powers supplied to grid are 20 kW and 15 kW, respectively, as shown in Figures 54 and 55. Both reactive powers are maintained at zero, as indicated in Figures 58 and 59. The DC voltage is maintained at 700 V DC, as seen in Figures 56 57. At t = 250 s, Load 3 is increased from 80 kW to 120 kW. The synchronous generator ($P_{sg1}$) operates in swing mode. In swing mode, the generator dynamically adjusts its active power output to match the system's power balance, while another synchronous generator ($P_{sg2}$) operates in PV mode, providing a constant power of 80 kW, as shown in Figure 61. When the load increases, the power output of the synchronous generator adjusts the power output ($P_{sg1}$) increases from 65 kW to 85 kW, as illustrated in Figure 60. Initially, the synchronous generator speed operates at 50 Hz. At t = 250 s, due to the power deficit created by the step increase in load, the grid frequency drops to 48.3 Hz. The frequency is then quickly compensated by the frequency regulator mechanism, restoring it to approximately 50.6 Hz. The grid frequency ($w_f$) response is shown in Figure 62, and the frequencies at PCC1 and PCC2 are shown in Figure 63. The experimental validation of the proposed controller was done by implementing the controller on a real-time simulator (OPAL-RT OP5700) to generate the SPWM signals to control a three-phase two-level IGBT Module Stack (Semikron®). It consists of three SKM50GB12T4 and SKHI22AR gate driver circuits with a dead time of 3.3 ps. The Hall effect sensors (LEM) are used for the feedback measurements signals of inverter current $I_{abc1}$, grid voltage $V_{abcg}$, grid current $I_{abc2}$, and the capacitor across the voltage $V_{abcF}$ of the LCL filter are fed to the controller using the analog input channels of the real-time simulator. The parameters of the hardware are given below.

AC grid voltage (RMS) $V_{grid}$: 360 V
DC link voltage, $V_{DC}$: 750 V
Switching frequency, $f_s$: 4000 Hz
Grid frequency, f: 50 Hz
Sampling time, $T_s$: 50 μs
Filter resistances, $R_1$, $R_2$: 0.1 Q
Inverter side Filter $L_1$: 1.18 mH
Grid side Filter $L_2$: 0.618 mH
Filter capacitance $C_f$: 60 μF
Active power rating P: 16 kW

Reactive power rating Q: 5 kV AR

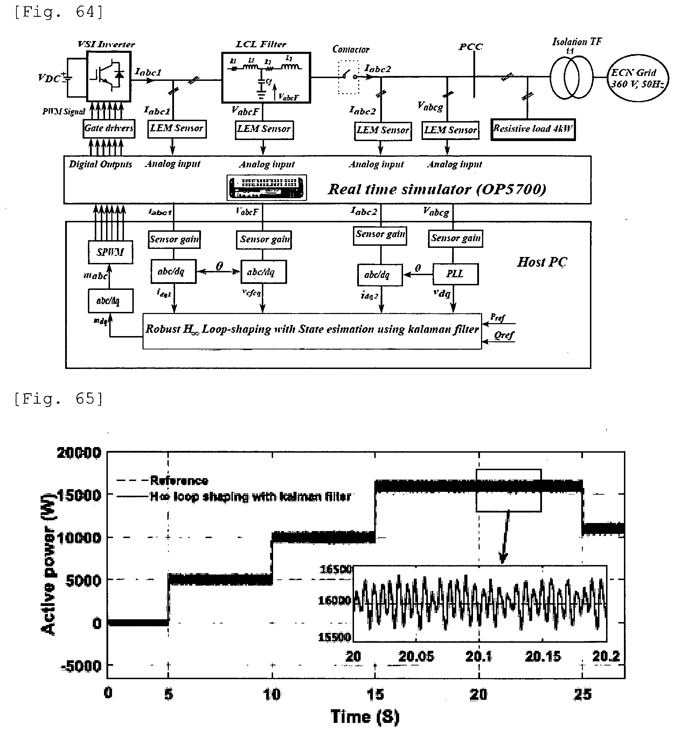

Figure 64 represents an exemplary hardware implementation for H∞ loopshaping with state estimation for Grid side converter.

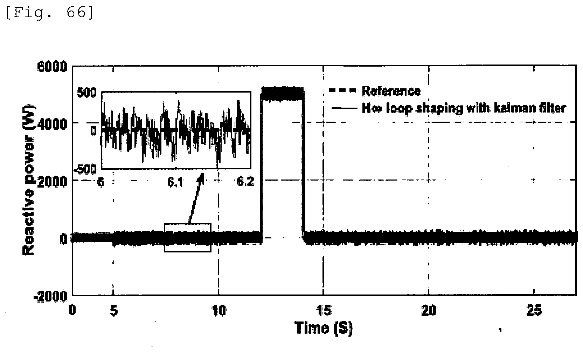

The Kalman filter is employed to attenuate high-frequency noise in measurements, ensuring that all estimated states align with the original states during the step response. This is integrated with the hardware-implemented H∞ loop shaping technique. As shown in Figure 65, the converter's response to step changes in the active power reference, $P_{ref}$, demonstrates its effectiveness. Initially, $P_{ref}$ is set to zero, with step increases to 5 kW at 5 seconds, 10 kW at 10 seconds, and 16 kW at 15 seconds, followed by a decrease of 5 kW at 25 seconds. The actual active power tracks these changes for H∞ loop shaping control reduced ripples observed in the waveform. Figure 66 presents the converter's response to step changes in the reactive power reference, $Q_{ref}$. A step increase of 5 kVAR is introduced at 12 seconds, showing that the actual reactive power accurately follows the step changes under the H∞ loop shaping with the Kalman filter.

**Claims**

1. - Method for controlling the operation of N Renewable Energy Source, RES, generators in an electrical grid, N being a non-zero natural integer, each RES generator $RES_i$, with $i \in \{1, .., N\}$, being connected to the electrical grid at a respective grid connection point, the reactive power, the active power and the voltage of the RES generator $RES_i$ being designated respectively $Q_i$, $P_i$ and $V_i$, the RES generator $RES_i$ injecting current in the electrical grid through a DC bus voltage, the DC bus voltage of the RES generator $RES_i$ being designated respectively $V_{dci}$, wherein the method comprises correcting the values of $P_i$, $V_{dci}$ and at least one of $Q_i$ and $V_i$, measured at the output of the $RES_i$ to reference values designated respectively by $Q_{iref}$, $P_{iref}$, $V_{iref}$ and $V_{dciref}$ at a first frequency, updating the values of $P_{iref}$ and $V_{dciref}$ at a second frequency slower than the first frequency, and updating the values of $Q_{iref}$, $V_{iref}$ at a third frequency slower than the second frequency.

2. - Method according to claim 1, wherein i is greater or equal to 2 and wherein, for each $RES_i$, the values of $P_i$, $V_{dci}$ and at least one of $Q_i$ and $V_i$ are calculated at the $RES_i$ level using values of $P_i$, $V_{dci}$ and at least one of $Q_i$ and $V_i$ and $Q_{iref}$, $P_{iref}$, $V_{iref}$ and $V_{dciref}$ available at the $RES_i$ level.

3. - Method according to claim 1, wherein i is greater or equal to 2 and wherein the values of $P_i$, $V_{dci}$ and at least one of $Q_i$ and $V_i$ are calculated centrally at the electrical grid level using values of $P_i$, $V_{dci}$ and at least one of $Q_i$ and $V_i$ and $Q_{iref}$, $P_{iref}$, $V_{iref}$ and $V_{dciref}$ available at all $RES_i$ in the electrical grid.

4. - Method according to claim 2 or claim 3, wherein the values of $P_{iref}$ and $V_{dciref}$ are updated as a function of the values of $P_i$ and $V_{dci}$ at the output of all the $RES_i$.

5. - Method according to one of claims 1 to 4, wherein the first frequency is greater than 1 Hz.

6. - Renewable energy source generator comprising calculation means and memory comprising instructions which, when executed by the calculation means, cause the calculation means to implement the method according to one of claims 1 to 5.

7. - Electrical grid comprising at least one Renewable Energy source according to claim 6.

8. - Machine readable medium comprising instructions which, when executed on a computer, cause the computer to implement the method according to one of claims 1 to 5.

[Fig. 1]

[Fig. 2]

[Fig. 3]

[Figure 4]

[Fig. 5a]

[Fig. 5b]

[Fig. 6]

[Fig. 7]

[Fig. 8]

Robust H∞ Loop shaping with State estimation

[Fig. 9]

[Fig. 10]

[Fig .11]

[Fig. 12]

[Fig. 13]

[Fig. 14]

[Fig. 15]

[Fig. 16]

[Fig. 17]

[Fig. 18]

[Fig. 19]

[Fig. 20]

[Fig. 21]

[Fig. 22]

[Fig. 23]

[Fig. 24]

[Fig. 25]

[Fig. 26]

[Fig. 27]

[Fig. 28]

[Fig. 29]

[Fig. 30]

[Fig. 31]

[Fig. 32]

[Fig. 33]

[Fig. 34]

[Fig. 35]

[Fig. 36]

[Fig. 37]

[Fig. 38]

[Fig. 39]

[Fig. 40]

[Fig. 41]

[Fig. 42]

[Fig. 43]

[Fig. 44]

[Fig. 45]

[Fig. 46]

[Fig. 47]

[Fig. 48]

[Fig. 49]

[Fig. 50]

[Fig. 51]

[Fig. 52]

[Fig. 53]

[Fig. 54]

[Fig. 55]

[Fig. 56]

[Fig. 57]

[Fig. 58]

[Fig. 59]

[Fig. 60]

[Fig. 61]

[Fig. 62]

[Fig. 63]

[Fig. 64]

[Fig. 65]

[Fig. 66]

Europäisches
Patentamt
European
Patent Office
Office européen
des brevets

# EUROPEAN SEARCH REPORT

**Application Number**

EP 24 31 5441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOGDAN MARINESCU ET AL: "A System Model-Based Approach for the Control of Power Park Modules for Grid Voltage and Frequency Services", ARXIV.ORG, CORNELL UNIVERSITY LIBRARY, 201 OLIN LIBRARY CORNELL UNIVERSITY ITHACA, NY 14853, 5 July 2021 (2021-07-05), XP091008115, | 1,3,5-8 | INV. H02J3/38 G05B15/02 |
| Y | * page 2 - page 10; figures 1-35 * | 2 | |
| A | | 4 | |
| | ----- | | |
| Y | MARINESCU B ET AL: "Dynamic Virtual Power Plant: A New Concept for Grid Integration of Renewable Energy Sources", ARXIV.ORG, CORNELL UNIVERSITY LIBRARY, 201 OLIN LIBRARY CORNELL UNIVERSITY ITHACA, NY 14853, 31 July 2021 (2021-07-31), XP091019306, | 2 | |
| A | * page 17 - page 18; figures 10, 11 * | 4 | |
| | ----- | | |

**TECHNICAL FIELDS SEARCHED (IPC)**

H02J
G05B

The present search report has been drawn up for all claims

| Place of search | Date of completion of the search | Examiner |
|---|---|---|
| Munich | 14 February 2025 | Mäki-Mantila, Harri |

EPO FORM 1503 03.82 (P4C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B. MARINESCU** ; **O. GOMIS-BELLMUNT** ; **F. DÖRFLER** ; **H. SCHULTE** ; **L. SIGRIST**. Dynamic Virtual Power Plant: A New Concept for Grid Integration of Renewable Energy Sources. *IEEE Access*, 2022, vol. 10, 104980-104995
- **HUANG, CHONGXIN** ; **YUE, DONG** ; **XIE, JUN** ; **LI, YAPING** ; **WANG, KE**. Economic dispatch of power systems with virtual power plant based interval optimization method. *CSEE Journal of Power and Energy Systems*, 2016, vol. 2 (1), 74-80
- **KORAKI, DESPINA** ; **STRUNZ, KAI**. Wind and Solar Power Integration in Electricity Markets and Distribution Networks Through Service-Centric Virtual Power Plants. *IEEE Transactions on Power Systems*, 2018, vol. 33 (1), 473-485
- An overview of ancillary services in Spain. *Electric Power Systems Research*, 2008, vol. 78 (3), 515-523
- **KAZMIERKOWSKI, M. P.** ; **MALESANI, L.** Current control techniques for three-phase voltage-source PWM converters: A survey. *IEEE Transactions on industrial electronics*, 1998, vol. 45 (5), 691-703
- **BACHA, S.** ; **MUNTEANU, I.** ; **BRATCU, A. I.** Power electronic converters modeling and control. *Advanced textbooks in control and signal processing*, 2014, vol. 454, 454
- **BRATCU, A. I.** ; **MUNTEANU, I.** ; **BACHA, S.** ; **PICAULT, D.** ; **RAISON, B.** Cascaded dc-dc converter photovoltaic systems: Power optimization issues. *IEEE Transactions on Industrial Electronics*, 2010, vol. 58 (2), 403-411

- **SKOGESTAD, S.** ; **POSTLETHWAITE, I.** Multivariable feedback control: analysis and design. John Wiley & sons, 2005
- **HÄBERLE, V.** ; **FISHER, M. W.** ; **ARAUJO, E. P. et al.** Control design of dynamic virtual power plants: An adaptive divide-and-conquer approach. *IEEE Transactions on Power Systems*, 2021
- **MAGID. S. MAHMOUD**. Decentralized Control and Filtering in Interconnected Dynamical Systems. CRC Press, 2011
- **ABAD, G.** ; **SANCHEZ-RUIZ, A.** ; **VALERA-GARCIA, J. J.** ; **MILIKUA, A.** Analysis and design guidelines for current control loops of grid-connected converters based on mathematical models. *Energies*, 2020, vol. 13 (21), 5849
- **KUNDUR, P.** Power Systems Stability and Control. EPRI, 1994
- **BISHOP, R. C. D. R. H.** *Modern control systems*, 2011
- **DUAN, G. R.** ; **YU, H. H.** LMIs in control systems: analysis, design and applications. CRC press, 2013
- **LOFBERG, J.** YALMIP: A toolbox for modeling and optimization in MATLAB®, in 2004 IEEE international conference on robotics and automation (IEEE Cat. No. 04CH37508). September 2004, 284-289
- **APS, M.** Mosek optimization toolbox for MATLAB. *User's Guide and Reference Manual*, 2019, vol. 4
- **WANG, L.** ; **GUAN, R. P.** State feedback control and Kalman filtering with MATLAB®/Simulink® tutorials. John Wiley & Sons, 2022